# EUROPEAN PATENT SPECIFICATION

(11) **EP 4 316 049 B1**
(45) Date of publication and mention of the grant of the patent: **31.07.2024**
(21) Application number: 21824109.9
(22) Date of filing: 03.12.2021
(51) Int. Cl.: H04W 64/00, H04W 88/08, H04W 92/12

(54) **POSITIONING REFERENCE SIGNAL (PRS) ACTIVITY REPORTING IN SPLIT-NODE ARCHITECTURE**
POSITIONIERUNGSREFERENZSIGNAL-(PRS)-AKTIVITÄTSBERICHT IN SPLIT-NODE-ARCHITEKTUR
RAPPORT D'ACTIVITÉ DU SIGNAL DE RÉFÉRENCE DE POSITIONNEMENT (PRS) DANS UNE ARCHITECTURE À NOEUDS DIVISÉS

(30) Priority: 31.03.2021 US 202163169033 P
(43) Date of publication of application: 07.02.2024
(60) Divisional application: 24184172.5
(73) Proprietor: Telefonaktiebolaget LM Ericsson (publ), 164 83 Stockholm (SE)
(72) Inventor: LYAZIDI, Yazid, 16552 Hässelby (SE); MUNIER, Florent, 426 53 Västra Frölunda (SE); SHREEVASTAV, Ritesh, 194 47 Upplands Väsby (SE); MURUGANATHAN, Siva, Stittsville, Ontario K2S0R3 (CA)
(74) Representative: Ericsson
(86) International application number: PCT/SE2021/051200
(87) International publication number: WO 2022/211692

(56) References cited:
- US-A1- 2021 051 559

## Description

### TECHNICAL FIELD

The present disclosure relates generally to wireless networks, and more specifically to wireless network transmission of positioning reference signals (PRS) that can be used to determine the geographic location of a user equipment (UE).

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

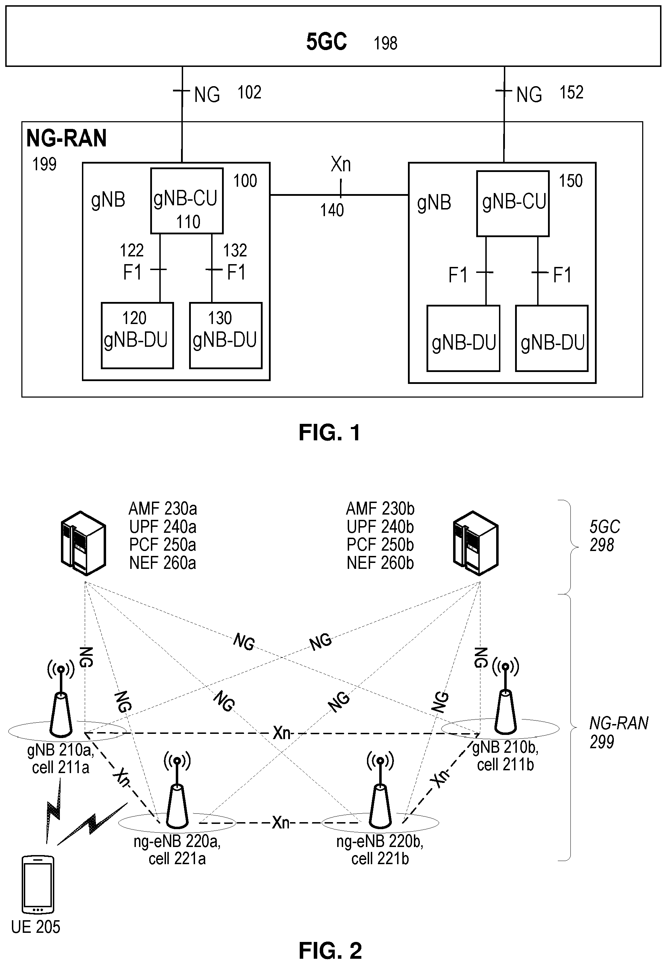

Figure 1 illustrates an exemplary high-level view of the 5G network architecture, consisting of a Next Generation RAN (NG-RAN) 199 and a 5G Core (5GC) 198. NG-RAN 199 can include a set of gNodeB's (gNBs) connected to the 5GC via one or more NG interfaces, such as gNBs 100, 150 connected via interfaces 102, 152, respectively. In addition, the gNBs can be connected to each other via one or more Xn interfaces, such as Xn interface 140 between gNBs 100 and 150. With respect the NR interface to UEs, each of the gNBs can support frequency division duplexing (FDD), time division duplexing (TDD), or a combination thereof.

NG-RAN 199 is layered into a Radio Network Layer (RNL) and a Transport Network Layer (TNL). The NG-RAN architecture, *i.e.*, the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," the term "AMF" being discussed in more detail below.

The NG RAN logical nodes shown in Figure 1 include a central (or centralized) unit (CU or gNB-CU) and one or more distributed (or decentralized) units (DU or gNB-DU). For example, gNB 100 includes gNB-CU 110 and gNB-DUs 120 and 130. CUs (*e.g.,* gNB-CU 110) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (*e.g.,* for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 122 and 132 shown in Figure 1. The gNB-CU and connected gNB-DUs are only visible to other gNBs and the 5GC as a gNB. In other words, the F1 interface is not visible beyond gNB-CU.

Figure 2 shows a high-level view of an exemplary 5G network architecture, including a Next Generation Radio Access Network (NG-RAN) 299 and a 5G Core (5GC) 298. As shown in the figure, NG-RAN 299 can include gNBs 210 (*e.g.,* 210a,b) and ng-eNBs 220 (*e.g.,* 220a,b) that are interconnected with each other via respective Xn interfaces. The gNBs and ng-eNBs are also connected via the NG interfaces to 5GC 298, more specifically to the Access and Mobility Management Function (*e.g.,* AMFs 230a,b) via respective NG-C interfaces and to the User Plane Function (*e.g.,* UPFs 240a,b) via respective NG-U interfaces. Moreover, the AMFs 230a,b can communicate with one or more policy control functions (e.g., PCFs 250a,b) and network exposure functions (e.g., NEFs 260a,b). In some embodiments, 5GC 598 can also include one or more Location Management Functions (LMFs), which are described in more detail below.

Each of the gNBs 210 can support the NR radio interface including frequency division duplexing (FDD), time division duplexing (TDD), or a combination thereof. Each of ng-eNBs 220 can support the fourth-generation (4G) Long-Term Evolution (LTE) radio interface. Unlike conventional LTE eNBs, however, ng-eNBs 220 connect to the 5GC via the NG interface. Each of the gNBs and ng-eNBs can serve a geographic coverage area including one more cells, such as cells 211a-b and 221a-b shown in Figure 2. Depending on the particular cell in which it is located, a UE 205 can communicate with the gNB or ng-eNB serving that particular cell via the NR or LTE radio interface, respectively. Although Figure 2 shows gNBs and ng-eNBs separately, it is also possible that a single NG-RAN node provides both types of functionality.

5G/NR technology shares many similarities with LTE. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. However, time-frequency resources can be configured much more flexibly for an NR cell than for an LTE cell. For example, rather than a fixed 15-kHz OFDM sub-carrier spacing (SCS) as in LTE, NR SCS can range from 15 to 240 kHz, with even greater SCS considered for future NR releases.

In addition to providing coverage via cells as in LTE, NR networks also provide coverage via "beams." In general, a downlink (DL, i.e., network to UE) "beam" is a coverage area of a network-transmitted reference signal (RS) that may be measured or monitored by a UE. In NR, for example, RS can include any of the following: synchronization signal/PBCH block (SSB), channel state information RS (CSI-RS), tertiary reference signals (or any other sync signal), positioning RS (PRS), demodulation RS (DMRS), phase-tracking reference signals (PTRS), *etc.* In general, SSB is available to all UEs regardless of the state of their connection with the network, while other RS (*e.g.,* CSI-RS, DM-RS, PTRS) are associated with specific UEs that have a network connection.

3GPP standards provide various ways for positioning (e.g., determining the position of, locating, and/or determining the location of) UEs operating in NR networks. In general, a positioning node configures a target device (e.g., UE) and/or radio access network (RAN) nodes (e.g., gNB, ng-eNB, or RAN node dedicated for positioning measurements) to perform one or more positioning measurements according to one or more positioning methods. For example, the positioning measurements can include timing (and/or timing difference) measurements on UE, network, and/or satellite transmissions. The positioning measurements are used by the target device, the measuring node, and/or the positioning node to determine the target device's location.

Network-transmitted PRS were introduced in LTE Rel-9 because cell-specific reference signals (CRS) were not sufficient for positioning. In particular, CRS could not provide the required high probability of detection. In general, a neighbor cell's synchronization signals (PSS/SSS) and reference signals are detectable when the Signal-to-Interference-and-Noise Ratio (SINR) is at least -6 dB. Simulations have shown, however, that this can be only guaranteed for 70% of all cases for the third-best detected cell, meaning that in at least 30% of cases only two neighboring cells are detected. This is not enough even in the interference-free environment used in the simulations, which cannot be ensured in a real-world scenario.

PRS were also specified for NR Rel-16 to enhance network location capabilities. For example, PRS transmission in low and high frequency bands (i.e., below and above 6GHz) and use of antenna arrays provide additional degrees of freedom to substantially improve positioning accuracy. Further enhancements are planned for NR Rel-17, including "on-demand PRS" whereby the UE can request the network to transmit PRS in a configuration that facilitates UE positioning measurements and (optionally) position determination.

A further example of prior art is given in US 2021/051559 A1.

### SUMMARY

However, there are various problems, issues, and/or difficulties related to transmission of PRS in the split-node architecture shown in Figure 1. The invention is carried out according to the appended independent claims. Optional features of the invention are carried out according to the dependent claims.

Embodiments of the present disclosure provide specific improvements to positioning UEs operating in a wireless network (e.g., RAN), such as by providing, enabling, and/or facilitating solutions to overcome exemplary problems summarized above and described in more detail below.

Embodiments include methods (*e.g.,* procedures) for a centralized unit (CU) of a RAN node that is associated with one or more transmission reception points (TRPs).

In the claimed invention, the method at a CU includes receiving, from a positioning node associated with the RAN, a first PRS activity report that includes information about PRS transmitted by TRPs associated with one or more DUs of the RAN node. Thee claimed method further includes associating the information in the first PRS activity report with respective DUs of the RAN node.

The claimed method further includes sending, to the DUs, respective second PRS activity reports that include the information associated with the respective DUs.

In some embodiments, these exemplary methods can also include receiving, from the DUs, respective acknowledgements of the second PRS activity reports.

In some embodiments, these exemplary methods can also include receiving, from the DUs, respective PRS action reports indicating actions taken by the respective DUs in response to the respective second PRS activity reports. In some of these embodiments, each PRS action report can include one or more of the following: an indication of PRS resources or beams that are activated or operational; and an indication of PRS resources or beams that are deactivated or non-operational.

In some embodiments, the first PRS activity report includes a list of PRS resource sets for the TRPs associated with the DUs.

In some of these embodiments, the first PRS activity report can also include the following information associated with each particular one of the PRS resource sets in the list:
- identifiers of PRS resources within the particular PRS resource set; and
- one or more of the following associated with each particular one of the PRS resources within the particular PRS resource set:
   ∘ a number of UEs that have reported reference signal receive power (RSRP) above a threshold for the particular PRS resource,
   ∘ average reported RSRP for the particular PRS resource,
   ∘ average reported reference signal received quality (RSRQ) for the particular PRS resource, and
   ∘ any quasi-colocation (QCL) relationships for the particular PRS resource.

In other of these embodiments, the first PRS activity report can also include the following information associated with each particular one of the PRS resource sets in the list:
- a number of UEs that have reported RSRP above a threshold for the particular PRS resource set,
- average reported RSRP for the particular PRS resource set,
- average reported RSRQ for the particular PRS resource set, and
- any QCL relationships for the particular PRS resource set.

In various embodiments, the CU can associate (e.g., sort, assign, relate, etc.) any of the above-mentioned information in the first PRS activity report with the corresponding DUs, such that the second PRS activity reports will have DU-specific subsets of the information in the first PRS activity report.

Other embodiments include exemplary methods (e.g., procedures) for a DU of a RAN node that is associated with one or more TRPs. In general, these exemplary methods can be complementary to the exemplary methods for a CU of the RAN node, summarized above.

In the claimed invention, the method at a CU includes receiving, from a CU of the RAN node, a PRS activity report that includes information about PRS transmitted by TRPs associated with the DU.

This claimed method further includes, based on the PRS activity report, performing one or more actions related to the PRS transmitted by the TRPs associated with the DU.

The claimed method also includes sending, to the CU, an acknowledgement of the PRS activity report.

The claimed method finally also includes sending, to the CU, a PRS action report indicating actions taken by the DU in response to the PRS activity report. In some of these embodiments, the PRS action report includes one or more of the following: an indication of PRS resources or beams that are activated or operational; and an indication of PRS resources or beams that are deactivated or non-operational.

In various embodiments, the received PRS activity report can include any of the information in the first PRS activity report in the CU-related embodiments described above, except that such information is specific to the particular DU and/or its associated TRPs.

In some embodiments, the one or more actions performed based on the PRS activity report can include any of the following:
- deactivating or maintaining deactivation of one or more first PRS resources indicated by the PRS activity report; and
- activating or maintaining activation of one or more second PRS resources indicated by the PRS activity report.

In some of these embodiments, the one or more first PRS resources are indicated by the PRS activity report as having no UE measurements or UE measurements that do not meet one or more criteria. Likewise, the one or more second PRS resources are indicated by the PRS activity report as having UE measurements that meet the one or more criteria. In some of these embodiments, the one or more criteria include any of the following:
- a RSRP threshold;
- a number of UEs that have reported RSRP above the RSRP threshold;
- an average reported RSRP relative to the RSRP threshold;
- a RSRQ threshold;
- a number of UEs that have reported RSRQ above the RSRQ threshold; and
- an average reported RSRQ relative to the RSRQ threshold;

In some of these embodiments, the one or more criteria can apply to each PRS resource or to each PRS resource set comprising a plurality of PRS resources.

Other embodiments include CUs and DUs of a RAN node (*e.g.,* base station, eNB, gNB, ng-eNB, *etc.)* configured to perform operations corresponding to any of the exemplary methods described herein. Other embodiments include non-transitory, computer-readable media storing program instructions that, when executed by processing circuitry, configure such CUs or DUs to perform operations corresponding to any of the exemplary methods described herein.

These and other embodiments described herein provide flexible and efficient signaling techniques between CU and DU to support allocation of PRS resources that can address energy-efficiency goals. Such techniques do not impact UE implementation or require standardization of new UE procedures, such that even legacy UEs can benefit. In addition, such techniques reduce PRS transmission overhead, energy consumption, and interference, since PRS activity reports include information that enables RAN nodes to selectively transmit PRS beams only to coverage areas with UEs needing such beams and to turn off PRS beams in other coverage areas. Accordingly, embodiments can improve positioning methods based on DL PRS.

These and other objects, features, and advantages of embodiments of the present disclosure will become apparent upon reading the following Detailed Description in view of the Drawings briefly described below.

### BRIEF DESCRIPTION OF THE DRAWINGS

Figures 1-2 illustrate two high-level views of an exemplary 5G/NR network architecture.
Figure 3 shows an exemplary configuration of NR UP and CP protocol stacks.
Figure 4 is a block diagram illustrating a high-level architecture for UE positioning in NR networks.
Figure 5 shown an example partitioning of positioning-related functionality in the split-gNB architecture shown in Figure 1.
Figure 6 shows an exemplary hybrid transmit beamforming arrangement.
Figures 7A-B show two exemplary beam sweeping arrangements involving two and three subarrays, respectively.
Figures 8-11 illustrate various signaling procedures between a gNB-DU and a gNB-CU, according to various embodiments of the present disclosure.
Figure 12 shows a flow diagram of an exemplary method for a CU of a RAN node (*e.g.,* base station, eNB, gNB, ng-eNB, *etc.),* according to various embodiments of the present disclosure.
Figure 13 shows a flow diagram of an exemplary method for a DU of a RAN node, according to various embodiments of the present disclosure.
Figure 14 shows a block diagram of an exemplary wireless device or UE, according to various embodiments of the present disclosure.
Figure 15 shows a block diagram of an exemplary network node according to various embodiments of the present disclosure.
Figure 16 shows a block diagram of an exemplary network configured to provide over-the-top (OTT) data services between a host computer and a UE, according to various embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided as examples to convey the scope of the subject matter to those skilled in the art.

Generally, all terms used herein are to be interpreted according to their ordinary meaning in the relevant technical field, unless a different meaning is clearly given and/or is implied from the context in which it is used. All references to alan/the element, apparatus, component, means, step, *etc.* are to be interpreted openly as referring to at least one instance of the element, apparatus, component, means, step, *etc.,* unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the enclosed embodiments will be apparent from the following description.

Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), base station distributed components (*e.g.,* CU and DU), a high-power or macro base station, a low-power base station (*e.g.,* micro, pico, femto, or home base station, or the like), an integrated access backhaul (IAB) node, a transmission point (TP), a transmission reception point (TRP), a remote radio unit (RRU or RRH), and a relay node.
- Core Network Node: As used herein, a "core network node" is any type of node in a core network. Some examples of a core network node include, e.g., a Mobility Management Entity (MME), a serving gateway (SGW), a PDN Gateway (P-GW), a Policy and Charging Rules Function (PCRF), an access and mobility management function (AMF), a session management function (SMF), a user plane function (UPF), a Charging Function (CHF), a Policy Control Function (PCF), an Authentication Server Function (AUSF), a location management function (LMF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of Things (IoT) devices, vehicle-mounted wireless terminal devices, *etc.*
- Network Node: As used herein, a "network node" is any node that is either part of the radio access network (*e.g.,* a radio access node or equivalent name discussed above) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Base station: As used herein, a "base station" may comprise a physical or a logical node transmitting or controlling the transmission of radio signals, *e.g.,* eNB, gNB, ng-eNB, en-gNB, centralized unit (CU)/distributed unit (DU), transmitting radio network node, transmission point (TP), transmission reception point (TRP), remote radio head (RRH), remote radio unit (RRU), Distributed Antenna System (DAS), relay, *etc.*
- Location server: As used herein, "location server" can refer to a network node with positioning functionality, *e.g.,* ability to provide assistance data and/or request positioning measurements and/or calculate a location based on positioning measurements. A location server may or may not be part of a base station.
- Positioning signals: As used herein, "positioning signals" may include any signal or channel to be received by the UE for performing a positioning measurement such as a DL reference signal, PRS, SSB, synchronization signal, DM-RS, CSI-RS, *etc.*
- Positioning measurements: As used herein, "positioning measurements" may include timing measurements (*e.g.,* time difference of arrival, TDOA, RSTD, time of arrival, TOA, Rx-Tx, RTT, *etc.*), power-based measurements (*e.g.,* RSRP, RSRQ, SINR, *etc.*), and/or identifier detection/measurement (*e.g.,* cell ID, beam ID, *etc.*) that are configured for a positioning method (*e.g.,* OTDOA, E-CID, *etc.*). UE positioning measurements may be reported to a network node or may be used for positioning purposes by the UE.
- Positioning beam: As used herein, a "positioning beam" can include any beam carrying at least one positioning signal and/or that is used for a positioning purpose such as for measurements supporting one or more positioning methods (e.g., OTDOA, AOA, etc.).. A positioning beam can have its own explicit identity or can be identified through an index associated with a specific signal that the beam carries.

The above definitions are not meant to be exclusive. In other words, various ones of the above terms may be explained and/or described elsewhere in the present disclosure using the same or similar terminology. Nevertheless, to the extent that such other explanations and/or descriptions conflict with the above definitions, the above definitions should control.

Note that the description given herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As briefly mentioned, PRS was also specified for use in NR Rel-16 but there are various problems, issues, and/or difficulties related to transmission of NR PRS in the split-node architecture shown in Figure 1. This is discussed in more detail after the following discussion of NR protocols and positioning architectures.

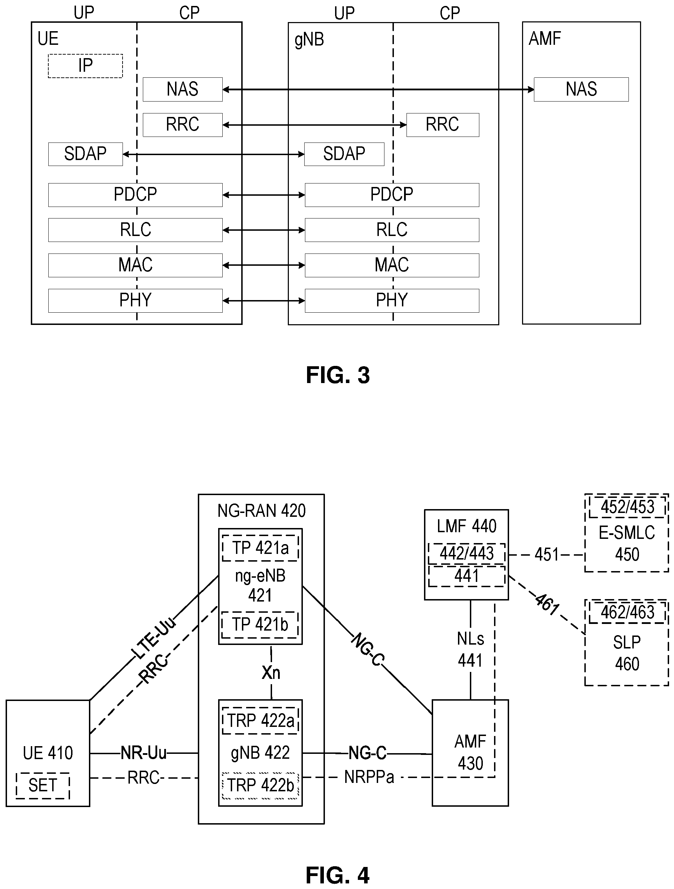

Figure 3 shows an exemplary configuration of NR user plane (UP) and control plane (CP) protocol stacks between a UE, a gNB, and an AMF, such as those shown in Figures 1-2. The Physical (PHY), Medium Access Control (MAC), Radio Link Control (RLC), and Packet Data Convergence Protocol (PDCP) layers between the UE and the gNB are common to UP and CP. The PDCP layer provides ciphering/deciphering, integrity protection, sequence numbering, reordering, and duplicate detection for both CP and UP. In addition, PDCP provides header compression and retransmission for UP data.

On the UP side, Internet protocol (IP) packets arrive to the PDCP layer as service data units (SDUs), and PDCP creates protocol data units (PDUs) to deliver to RLC. The Service Data Adaptation Protocol (SDAP) layer handles quality-of-service (QoS) including mapping between QoS flows and Data Radio Bearers (DRBs) and marking QoS flow identifiers (QFI) in UL and DL packets. The RLC layer transfers PDCP PDUs to the MAC through logical channels (LCH). RLC provides error detection/correction, concatenation, segmentation/reassembly, sequence numbering, reordering of data transferred to/from the upper layers. The MAC layer provides mapping between LCHs and PHY transport channels, LCH prioritization, multiplexing into or demultiplexing from transport blocks (TBs), hybrid ARQ (HARQ) error correction, and dynamic scheduling (on gNB side). The PHY layer provides transport channel services to the MAC layer and handles transfer over the NR radio interface, e.g., via modulation, coding, antenna mapping, and beam forming.

On CP side, the non-access stratum (NAS) layer is between UE and AMF and handles UE/gNB authentication, mobility management, and security control. The RRC layer sits below NAS in the UE but terminates in the gNB rather than the AMF. RRC controls communications between UE and gNB at the radio interface as well as the mobility of a UE between cells in the NG-RAN. RRC also broadcasts system information (SI) and performs establishment, configuration, maintenance, and release of DRBs and Signaling Radio Bearers (SRBs) and used by UEs. Additionally, RRC controls addition, modification, and release of carrier aggregation (CA) and dual-connectivity (DC) configurations for UEs. RRC also performs various security functions such as key management.

After a UE is powered ON it will be in the RRC IDLE state until an RRC connection is established with the network, at which time the UE will transition to RRC_CONNECTED state (*e*.*g*., where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC _IDLE UE receives SI broadcast in the cell where the UE is camping, performs measurements of neighbor cells to support cell reselection, and monitors a paging channel on PDCCH for pages from 5GC via gNB. An NR UE in RRC_IDLE state is not known to the gNB serving the cell where the UE is camping. However, NR RRC includes an RRC_INACTIVE state in which a UE is known (e.g., via UE context) by the serving gNB. RRC_INACTIVE has some properties similar to a "suspended" condition used in LTE.

Three important functional elements of the 3GPP positioning architecture are LCS Client, LCS target, and LCS Server. The LCS Server is a physical or logical entity (e.g., a location server) that manages positioning for an LCS target (e.g., a UE) by collecting measurements and other location information, assisting the LCS target in measurements when necessary, and estimating the LCS target location. An LCS Client is a software and/or hardware entity that interacts with an LCS Server for the purpose of obtaining location information for one or more LCS targets (i.e., the entities being positioned) such as a UE. LCS Clients may also reside in the LCS targets themselves. An LCS Client sends a request to an LCS Server to obtain location information, and the LCS Server processes and serves the received requests and sends the positioning result and optionally a velocity estimate to the LCS Client. A positioning request can be originated from the terminal or a network node or external client.

Position calculation can be conducted, for example, by the LCS Server (e.g., E-SMLC or SLP) or by the LCS target (e.g., a UE). The former approach corresponds to the UE-assisted positioning mode when it is based on UE measurements, whilst the latter corresponds to the UE-based positioning mode. Additionally, the following positioning methods are supported in NR:
- Enhanced Cell ID (E-CID). Utilizes information to associate the UE with the geographical area of a serving cell, and then additional information to determine a finer granularity position. The following measurements are supported for E-CID: AoA (base station only), UE Rx-Tx time difference, timing advance (TA) types 1 and 2, reference signal received power (RSRP), and reference signal received quality (RSRQ).
- Assisted GNSS. GNSS information retrieved by the UE, supported by assistance information provided to the UE from the E-SMLC.
- OTDOA (Observed Time Difference of Arrival). The UE receives and measures Global Navigation Satellite System (GNSS) signals, supported by assistance information provided to the UE from E-SMLC.
   » UTDOA (Uplink TDOA). The UE is requested to transmit a specific waveform that is detected by multiple location measurement units (LMUs, which may be standalone, co-located or integrated into an eNB) at known positions. These measurements are forwarded to the E-SMLC for multilateration.
- Multi-RTT: The device (e.g., UE) computes UE Rx-Tx time difference and gNBs compute gNB Rx-Tx time difference. The results are combined to find the UE position based upon round trip time (RTT) calculation.
- DL angle of departure (DL-AoD): gNB or LMF calculates the UE angular position based upon UE DL RSRP measurement results (e.g., of PRS transmitted by network nodes).
- UL angle of arrival (UL-AoA): gNB calculates the UL AoA based upon measurements of a UE's UL SRS transmissions.

In addition, one or more of the following positioning modes can be utilized in each of the positioning methods listed above:
- UE-Assisted: The UE performs measurements with or without assistance from the network and sends these measurements to the E-SMLC where the position calculation may take place.
- UE-Based: The UE performs measurements and calculates its own position with assistance from the network.
- Standalone: The UE performs measurements and calculates its own position without network assistance.

The detailed assistance data may include information about network node locations, beam directions, etc. The assistance data can be provided to the UE via unicast or via broadcast.

Figure 4 is a block diagram illustrating a high-level architecture for supporting UE positioning in NR networks. NG-RAN 420 can include nodes such as gNB 422 and ng-eNB 421, similar to the architecture shown in Figure 2. Each ng-eNB may be associated with and/or control several transmission points (TPs, e.g., 421a-b), such as remote radio heads. Similarly, each gNB may be associated with and/or control several TRPs (e.g., 422a-b). Some or all of the TPs/TRPs may be DL-PRS-only for support of PRS-based TBS.

In addition, the NG-RAN nodes communicate with an AMF 430 in the 5GC via respective NG-C interfaces (both of which may or may not be present), while AMF 430 communicates with a location management function (LMF) 440 communicate via an NLs interface 441. An LMF supports various functions related to determination of UE locations, including location determination for a UE and obtaining DL location measurements or a location estimate from the UE, UL location measurements from the NG RAN, and non-UE associated assistance data from the NG RAN.

In addition, positioning-related communication between UE 410 and the NG-RAN nodes occurs via the RRC protocol, while positioning-related communication between NG-RAN nodes and LMF occurs via an NRPPa protocol. Optionally, the LMF can also communicate with an E-SMLC 450 and a SUPL 460 in an LTE network via communication interfaces 451 and 461, respectively. Communication interfaces 451 and 461 can utilize and/or be based on standardized protocols, proprietary protocols, or a combination thereof.

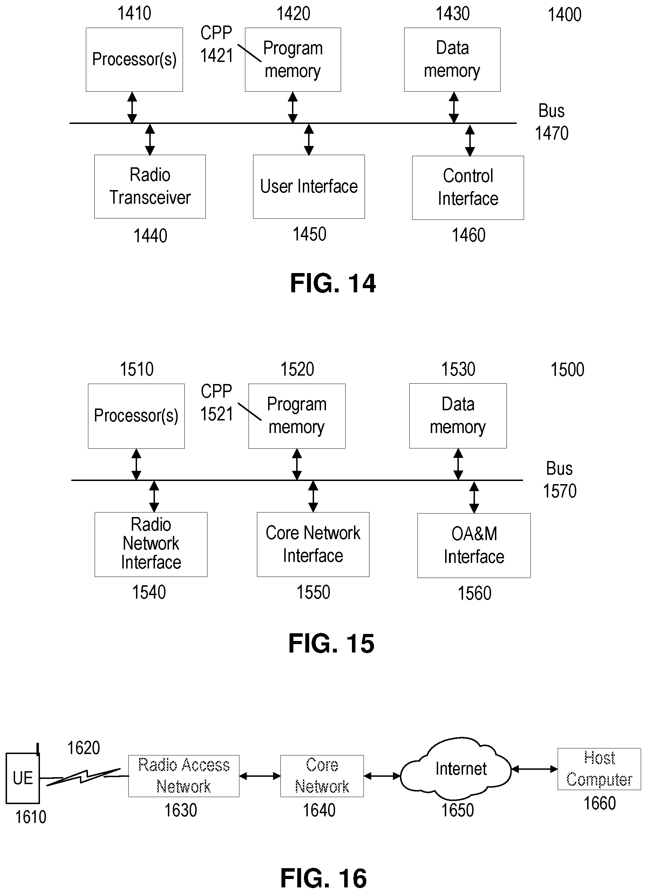

LMF 440 can also include, or be associated with, various processing circuitry 442, by which the LMF performs various operations described herein. Processing circuitry 442 can include similar types of processing circuitry as described herein in relation to other network nodes (*see, e.g.,* description of Figure 15). LMF 440 can also include, or be associated with, a non-transitory computer-readable medium 443 storing instructions (also referred to as a computer program product) that can facilitate the operations of processing circuitry 442. Medium 443 can include similar types of computer memory as described herein in relation to other network nodes (*see, e.g.,* description of Figure 15). Additionally, LMF 440 can include various communication interface circuitry 441 (e.g., Ethernet, optical, and/or radio transceivers) that can be used, e.g., for communication via the NLs interface. For example, communication interface circuitry 441 can be similar to other interface circuitry described herein in relation to other network nodes (*see, e.g.,* description of Figure 15).

Similarly, E-SMLC 450 can also include, or be associated with, various processing circuitry 452, by which the E-SMLC performs various operations described herein. Processing circuitry 452 can include similar types of processing circuitry as described herein in relation to other network nodes (*see, e.g.,* description of Figure 15). E-SMLC 450 can also include, or be associated with, a non-transitory computer-readable medium 453 storing instructions (also referred to as a computer program product) that can facilitate the operations of processing circuitry 452. Medium 453 can include similar types of computer memory as described herein in relation to other network nodes (*see, e.g.,* description of Figure 15). E-SMLC 450 can also have communication interface circuitry that is appropriate for communicating via interface 451, which can be similar to other interface circuitry described herein in relation to other network nodes (*see, e.g.,* description of Figure 15).

Similarly, SLP 460 can also include, or be associated with, various processing circuitry 462, by which the SLP performs various operations described herein. Processing circuitry 662 can include similar types of processing circuitry as described herein in relation to other network nodes (*see, e.g.,* description of Figure 15). SLP 460 can also include, or be associated with, a non-transitory computer-readable medium 463 storing instructions (also referred to as a computer program product) that can facilitate the operations of processing circuitry 462. Medium 463 can include similar types of computer memory as described herein in relation to other network nodes (*see, e.g.,* description of Figure 15). SLP 460 can also have communication interface circuitry that is appropriate for communicating via interface 461, which can be similar to other interface circuitry described herein in relation to other network nodes (*see*, *e.g.,* description of Figure 15).

In a typical operation, the AMF can receive a request for a location service associated with a particular target UE from another entity (e.g., a gateway mobile location center (GMLC)), or the AMF itself can initiate some location service on behalf of a particular target UE (e.g., for an emergency call from the UE). The AMF then sends a location services (LS) request to the LMF. The LMF processes the LS request, which may include transferring assistance data to the target UE to assist with UE-based and/or UE-assisted positioning; and/or positioning of the target UE. The LMF then returns the result of the LS (e.g., a position estimate for the UE and/or an indication of any assistance data transferred to the UE) to the AMF or to another entity (e.g., GMLC) that requested the LS.

An LMF may have a signaling connection to an E-SMLC, enabling the LMF to access information from E-UTRAN, e.g., to support E-UTRA OTDOA positioning using downlink measurements obtained by a target UE. An LMF can also have a signaling connection to an SLP, the LTE entity responsible for user-plane positioning.

Various interfaces and protocols are used for, or involved in, NR positioning. The LTE Positioning Protocol (LPP) is used between a target device (e.g., UE in the control-plane, or SET in the user-plane) and a positioning server (e.g., LMF in the control-plane, SLP in the user-plane). LPP can use either the control- or user-plane protocols as underlying transport. NRPP is terminated between a target device and the LMF. RRC protocol is used between UE and gNB (via NR radio interface) and between UE and ng-eNB (via LTE radio interface).

Furthermore, the NR Positioning Protocol A (NRPPa) carries information between the NG-RAN Node and the LMF and is transparent to the AMF. As such, the AMF routes the NRPPa PDUs transparently (e.g., without knowledge of the involved NRPPa transaction) over NG-C interface based on a Routing ID corresponding to the involved LMF. More specifically, the AMF carries the NRPPa PDUs over NG-C interface either in UE associated mode or non-UE associated mode. The NGAP protocol between the AMF and an NG-RAN node (e.g., gNB or ng-eNB) is used as transport for LPP and NRPPa messages over the NG-C interface. NGAP is also used to instigate and terminate NG-RAN-related positioning procedures.

LPP/NRPP are used to deliver messages such as positioning capability request, OTDOA positioning measurements request, and OTDOA assistance data to the UE from a positioning node (e.g., location server). LPP/NRPP are also used to deliver messages from the UE to the positioning node including, e.g., UE capability, UE measurements for UE-assisted OTDOA positioning, UE request for additional assistance data, UE configuration parameter(s) to be used to create UE-specific OTDOA assistance data, etc. NRPPa is used to deliver the information between ng-eNB/gNB and LMF in both directions. This can include LMF requesting some information from ng-eNB/gNB, and ng-eNB/gNB providing some information to LMF. For example, this can include information about PRS transmitted by ng-eNB/gNB that are to be used for OTDOA positioning measurements by the UE.

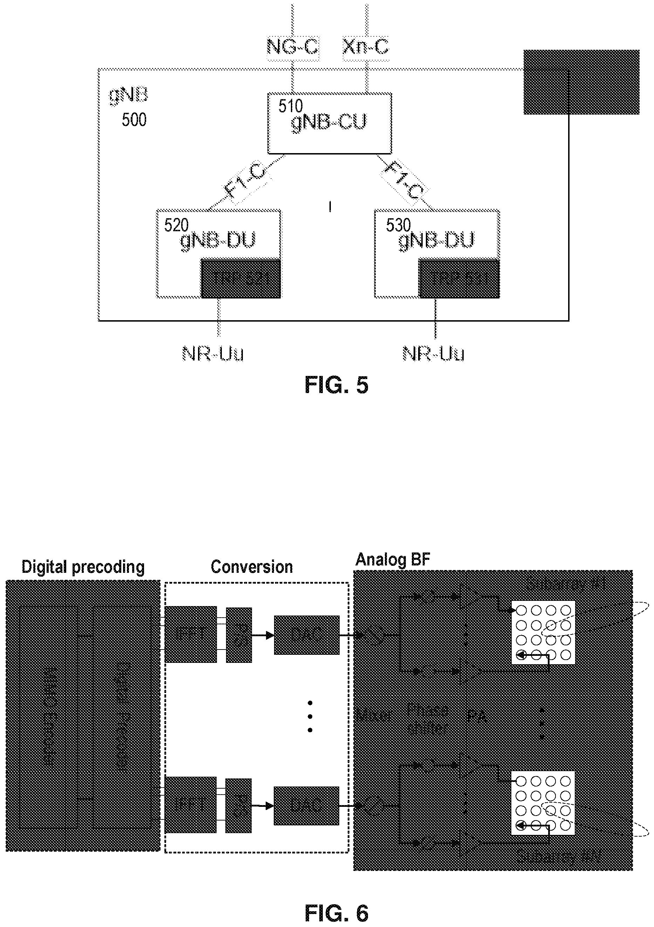

Figure 5 shown an example partitioning of positioning-related functionality in the split-gNB architecture shown in Figure 1. The gNB-DU hosts the TRP functionality shown in Figure 4. Location management messages can be transferred between gNB-CU and gNB-DU. For example, a gNB-CU can request TRP information and/or positioning measurements from a gNB-DU, and the gNB-DU can respond with the requested information (if available).

3GPP specifications for NR Rel-16 include broadcast of positioning assistance via Positioning System Information Blocks (posSIBs). The posSIBs are carried in RRC System Information (SI) messages. The gNB-CU can transfer posSIBs to a gNB-DU, which is responsible for broadcasting the posSIBs according to available scheduling parameters.

One goal of 3GPP Rel-17 positioning enhancements is optimize and/or improve signaling and procedures for improved accuracy, reduced latency, network efficiency, and device efficiency. In order to meet the requirement of low latency, transmissions delays in the UL between UE and network should be reduced and/or optimized.

Recent advances in massive antenna systems (massive MIMO) can provide additional degrees of freedom to enable a more accurate user location estimation by exploiting spatial and angular domains of the propagation channel in combination with time measurements. These spatial techniques, also referred to as "beamforming", can be used on transmission beams and/or reception beams, by the network or by the UE.

Currently, two NR frequency ranges are explicitly distinguished in 3GPP: FR1 (below 6 GHz) and FR2 (above 6 GHz). It is known that high-frequency radio communication above 6 GHz suffers from significant path loss and penetration loss. One solution to address this issue is to deploy large-scale antenna arrays to achieve high beamforming gain, which is a reasonable solution due to the small wavelength of high-frequency signal. Such solutions are often referred to as multiple-input multiple-output (MIMO) or, in the case of large-scale antenna arrays anticipate for NR, massive MIMO. In particular, up to 64 beams are supported for FR2. In addition, it is expected that the greater number of antenna elements will also be used in FR1 to obtain more beamforming and multiplexing gain.

With massive MIMO, three approaches to beamforming have been discussed: analog, digital, and hybrid (a combination of analog and digital). Analog beamforming can compensate for high pathloss in NR scenarios, while digital precoding can provide additional performance gains (e.g., similar to MIMO for FR1) necessary to achieve a reasonable coverage. The implementation complexity of analog beamforming is significantly less than digital since it can utilize simple phase shifters, but it is limited in terms of multi-direction flexibility (i.e., a single beam can be formed at a time and the beams are then switched in time domain), transmission bandwidth (i.e., not possible to transmit over a sub-band), inaccuracies in the analog domain, etc.

Digital beamforming requires costly converters between the digital domain and the intermediate frequency (IF) radio domain. However, digital beamforming, which is often used today in LTE networks, provides the best performance in terms of data rate and multiplexing capabilities. For example, multiple beams over multiple sub-bands can be formed simultaneously. Even so, digital beamforming presents challenges in terms of power consumption, integration, and cost. Furthermore, while cost generally scales linearly with the number of transmit/receive units, the gains of digital beamforming increase more slowly.

Hybrid beamforming, which provides cost benefits from analog beamforming and capacity benefits from digital beamforming, is therefore desirable for NR. Figure 6 shows an exemplary hybrid transmit (TX) beamforming arrangement, which includes a digital precoding section and an analog beamforming (BF) section that are coupled by intermediate conversion circuitry. As shown in Figure 6, the analog BF portion includes independent analog circuitry for each of N subarrays of antenna elements. For each subarray, the analog circuitry includes mixers (e.g., from IF to RF), phase shifters, and power amplifiers (PAs). Each subarray can generate a beam separate from other subarrays. The conversion circuity includes independent IFFT modulators, parallel-to-serial converters (P/S), and digital-to-analog converters (DAC) for each of the N channels of the analog BF circuitry.

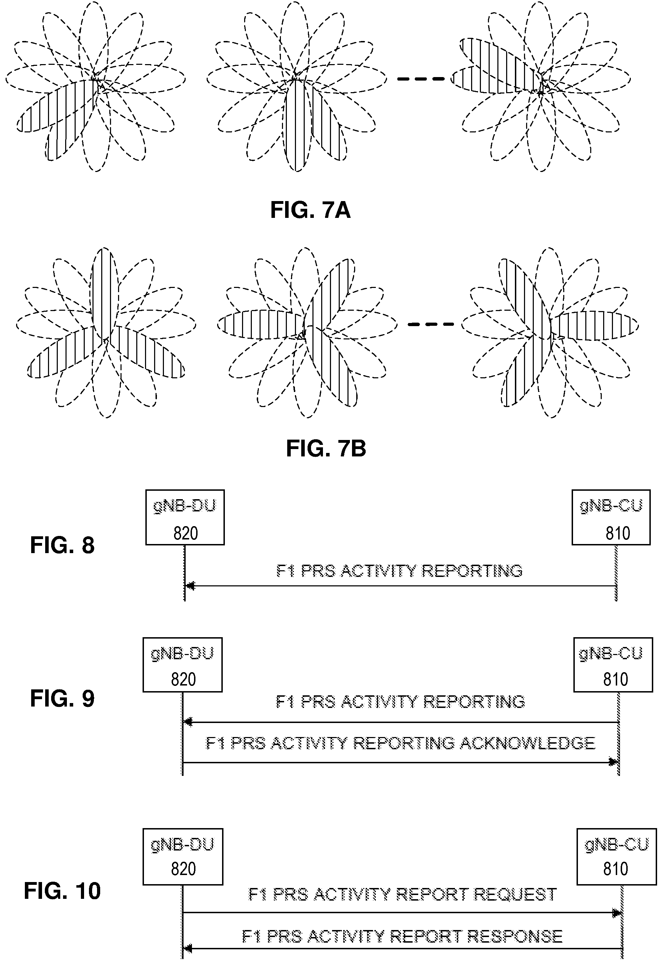

The analog beam of a subarray can be steered toward a single direction on each OFDM symbol, and hence the number of subarrays determines the number of beam directions and the corresponding coverage on each OFDM symbol. However, the number of beams to cover an entire served area is typically larger than the number of subarrays, especially when the individual beam-width is narrow. Therefore, to cover the entire served area, multiple transmissions with narrow beams steered differently in time domain are also likely to be needed. The provision of multiple narrow coverage beams for this purpose has been called "beam sweeping". Figure 7 shows two exemplary beam sweeping arrangements involving two subarrays (Figure 7A) and three subarrays (Figure 7B).

For analog and hybrid beamforming, beam sweeping can be very important for providing necessary coverage in NR networks. For this purpose, multiple OFDM symbols, in which differently steered beams can be transmitted through subarrays, can be assigned and periodically transmitted. In general, both RX and TX beam sweeping function in a similar manner at the base station side.

UEs and gNBs also perform beam measurements to evaluate quality of the received signal on DL and UL beams, respectively. For example, a UE measures quality on SSB beams based on parameters such as SS-SINR (signal-to-interference-and-noise ratio), SS-RSRP (reference signal received power), SS-RSRQ (reference signal received quality), etc. A gNB performs similar measurements on UL beams (e.g., SRS) from a UE but gNB measurements are not specified by 3GPP and left to vendor implementation. UEs and gNBs also perform beam determination to determine a best or most suitable DL and UL beam, respectively, based on the beam measurements. UEs also report beam quality measurements and beam determination results to the gNB. Additionally, when a UE in RRC_CONNECTED state experiences poor channel conditions, it receives a beam failure indication from its lower layers (e.g., PHY) and can request beam recovery by sending a message to its serving gNB.

The term "spatial relation" to refer to a relationship between an UL RS and another RS, which can be either a DL RS or an UL RS. This is also defined from a UE perspective. If the UL RS is spatially related to a DL RS, it means that the UE should transmit the UL RS in the opposite (reciprocal) direction from which it received the corresponding DL RS. More precisely, the UE should apply the "same" Tx spatial filtering (or beamforming) configuration for transmitting the spatially-related UL RS as the Rx spatial filtering (or beamforming) configuration that it used for receiving the corresponding DL RS.

NR Rel-16 positioning supports beamforming. DL PRS is constructed as a DL PRS Resource set consisting of multiple DL PRS Resources, each transmitted over a separate beam. An UL SRS can have a spatial relation to a DL PRS Resource as signaled through the combination of a DL PRS Resource set ID and a DL PRS Resource ID. The UE will then transmit the UL SRS using the same antenna panel as it uses to receive the corresponding DL PRS resource and using the same (reciprocal) beam as it uses to receive the DL PRS Resource.

If a TRP requires Z watts (W) to transmit X DL PRS resource sets and Y number of resources per DL PRS resource set, the TRP will only require Z/4 W to transmit X/2 DL PRS resource sets and Y/2 resources per DL PRS resource set. Furthermore, PRS transmission may need to be beamformed to compensate for higher path loss at higher carrier frequencies (e.g., FR2). Beam sweeping PRS in all directions (e.g., as in Figure 7) results in unnecessary PRS transmissions, i.e., to coverage areas that do not include UEs needing PRS. Accordingly, there is a need for a solution that reduces inter-node signaling (and corresponding latency) and improves the efficiency of PRS transmissions to the most appropriate directions, such that PRS transmission can be disabled in certain beams to reduce PRS overhead, energy consumption, and interference.

Accordingly, embodiments of the present disclosure provide flexible and efficient signaling techniques (e.g., via F1-AP interface) between gNB-CU and gNB-DU to support allocation of PRS resources to meet energy-efficiency goals. For example, a gNB-CU can send a PRS activity report (received, e.g., from an LMF) to a gNB-DU via an F1AP signaling message. This gNB-CU can take this information into account for properly allocating PRS resources to its TRPs and efficiently activating the beam transmission to meet energy-efficiency goals. Additionally, the gNB-DU can send an F1-AP message to acknowledge the PRS activity report and/or to inform of the actions taken in response to the PRS activity report.

Embodiments of the present disclosure can provide various advantages, benefits, and/or solutions to problems. Such techniques are transparent to UEs and do not impact UE implementation or require standardization of new UE procedures (e.g., in RRC). As such, legacy UEs can also benefit. In addition, such techniques reduce PRS transmission overhead, energy consumption, and interference, since PRS activity reports include information that enables RAN nodes to selectively transmit PRS beams only to coverage areas with UEs needing such beams and to turn off PRS beams in other coverage areas. Accordingly, embodiments can improve PRS-based positioning by reducing transmission overhead.

Various embodiments described herein are based on the gNB-DU receiving a PRS Activity Report (also referred to as "PRS Activity Reporting message") from the LMF (e.g., via NRPPa) that can include various information such as:
- PRS measurement reports provided by UE(s) to the LMF over LPP. Such a report can contain the PRS resources and the RSRP measurement information from the best available TRPs/cells on each frequency layer.
- The number of UEs for which this resource reporting is valid.
- Aggregated PRS beam utilization statistics from several UEs, e.g., to help gNB adapt PRS beam transmission.
- Other assistance information.

Furthermore, various embodiments are based on, or consistent with, the principle that a gNB owns and controls its own radio resources and any solution designed to reduce radio resource overhead should be controlled by the gNB itself. Accordingly, in some embodiments, a gNB may subscribe to or request a PRS Activity Report from the LMF, and LMF may provide the report to requesting or subscribing RAN nodes. In other embodiments, the LMF may provide such a report unsolicited (i.e., without request or subscription), e.g., periodically every X time units. For example, this reporting period can be configured via an operations/administration/maintenance (OAM) function associated with the RAN. A receiving gNB may acknowledge the report by responding to the LMF.

In other variants, a gNB may subscribe to or request a PRS Activity Report from the LMF, and LMF may provide a periodic report every X time units in response to the single request. The LMF may send only a certain number of such reports in response to the single request, with the number being predetermined or based on a predetermined duration and the reporting period, X. The predetermined number or duration can be configured via the OAM function.

In some embodiments, after receiving a PRS Activity Report over NRPPa from the LMF, a gNB-CU can send this information over F1AP to its connected gNB-DUs. For example, the signaling of this new F1-AP PRS Activity Report can be in the form of a class 2 procedure such as illustrated by the signal flow diagram shown in Figure 8 between a gNB-CU (810) and a gNB-DU (820).

As another example, the signaling of this new F1-AP PRS Activity Report can be in the form of a class 1 procedure such as illustrated by the signal flow diagram between a gNB-CU (810) and a gNB-DU (820) shown in Figure 9. In this example, the gNB-DU responds to the gNB-CU with an acknowledgement message, which indicates that the gNB-CU understood the PRS Activity Report and has taken the received information into account in its PRS management.

In other embodiments, a gNB-DU can take the initiative and request a PRS Activity Report from its gNB-CU via existing F1-AP signaling defined in 3GPP TS 38.473 (v16.3.0) or via a new F1 message. For example, the signaling can be in the form of a class 1 procedure such as illustrated by the signal flow diagram between a gNB-CU (810) and a gNB-DU (820) shown in Figure 10. In this example, the gNB-DU sends an F1 PRS Activity Report Request to the gNB-CU, which responds with an F1 PRS Activity Report Response including information received from the LMF that is relevant to the gNB-DU.

In any of the embodiments described above and exemplified by Figures 8-10, the PRS Activity Report can include any of the following:
- List of PRS resources set that can be configured by the TRPs hosted in the gNB-CU node.
- Resource ID for each resource set
- For each PRS resource ID:
   ∘ Number of UEs that have reported good RSRP values;
   ∘ Average reported RSRP; and
   ∘ (optional) QCL information for each PRS resource.

Since there can be multiple PRS resource sets configured for a gNB-DU/TRP, the corresponding PRS Resource Set ID is also included for each PRS resource included in the PRS Activity Report.

The information in the PRS Activity Report can be per DL-PRS resource ID (i.e., beam) or aggregated for each DL-PRS Resource set. If all beams of a DL-PRS resource set are performing below or above a threshold, then aggregated information can reduce signaling between gNB-CU and gNB-DU while still providing actionable information to the gNB-DU.

The F1 PRS Activity report may also be based upon some pre-requisite procedure such as NR Enhanced Cell ID, spatial relation formation (DL and UL beam correspondence information), or QCL (two signals transmitted from same antenna port). The report then provides a recommendation to the DUs which beams should be used for PRS transmission based on this beam identification. Those pre-requisite procedures are defined in 3GPP TS 38.473 (v16.3.0).

Table 1 below shows an exemplary structure for an F1 PRS Activity Report message shown in Figures 8-9 and for an F1 PRS Activity Report Response message shown in Figure 10. This exemplary structure provides information on a DL-PRS resource (i.e., beam) level. In this table, *maxnoofPRSresourceSet* represents a maximum number of PRS resource sets (typically 8) and *maxnoofPRSresource* represents a maximum number of PRS resources per PRS resource set (typically 64). In the "Pres." column, "M" indicates that inclusion of the the IE is mandatory and "O indicates inclusion of the IE is optional.

**Table 1.**

| **IE/Group Name** | | | **Pres.** | **IE type/ref.** | **Semantics description** |
|---|---|---|---|---|---|
| Message Type | | | M | 9.3.1.1 | |
| gNB-CU UE F1AP ID | | | M | 9.3.1.4 | |
| gNB-DU UE F1AP ID | | | M | 9.3.1.5 | |
| **PRS Resource Set List** | | | | *1..* <*maxnoPRSResourceSet*> | |
| > PRS Resource Set ID | | | M | INTEGER(0...7) | |
| > **PRS Resource List** | | | M | *1.. <maxnoPRSResource>* | |
| >> PRS resource ID | | | M | INTEGER(0..63) | |
| >> **UE statistics** | | | O | | |
| | >>> Number of UEs | | M | INTEGER(0..N) | |
| | >>>Number of UEs above RSRP Threshold | | M | INTEGER(0..N) | |
| | >>> average RSRP | | O | INTEGER (0..127) | |
| | >>>average RSRQ | | O | INTEGER (0..127) | |
| >> CHOICE QCL Info | | | O | | |
| | >>>SSB | | | | |
| | | >>>>NR PCI | M | INTEGER(0..1007) | |
| | | >>>> SSB Index | O | INTEGER(0..63) | |
| | >>>DL-PRS | | | | |
| | | >>>>QCL Source PRS Resource Set ID | M | INTEGER(0..7) | |
| | | >>>>QCL Source PRS Resource ID | O | INTEGER(0..63) | If absent, the QCL source PRS resource ID is same as PRS resource ID |

Table 2 below shows an exemplary structure for an F1 PRS Activity Report Acknowledge message shown in Figure 9.

**Table 2.**

| **IE/Group Name** | **Presence** | **IE type/ref.** | **Semantics description** |
|---|---|---|---|
| Message Type | M | 9.3.1.1 | |
| gNB-CU UE F1AP ID | M | 9.3.1.4 | |
| gNB-DU UE F1AP ID | M | 9.3.1.5 | |

Table 3 below shows an exemplary structure for an F1 PRS Activity Report Request message shown in Figure 10.

**Table 3.**

| **IE/Group Name** | **Presence** | **IE type/ref.** | **Semantics description** |
|---|---|---|---|
| Message Type | M | 9.3.1.1 | |
| gNB-CU UE F1AP ID | M | 9.3.1.4 | |
| gNB-DU UE F1AP ID | M | 9.3.1.5 | |

Upon reception of the PRS Activity Report message, the gNB-DU can take the information list of the PRS resources into account for activating its PRS beams in its cells/TRPs, following if the activity report shows that the UE(s) have reported good RSRP values in those TRPs; or deactivate the PRS beams due to poor (or no) reported results.

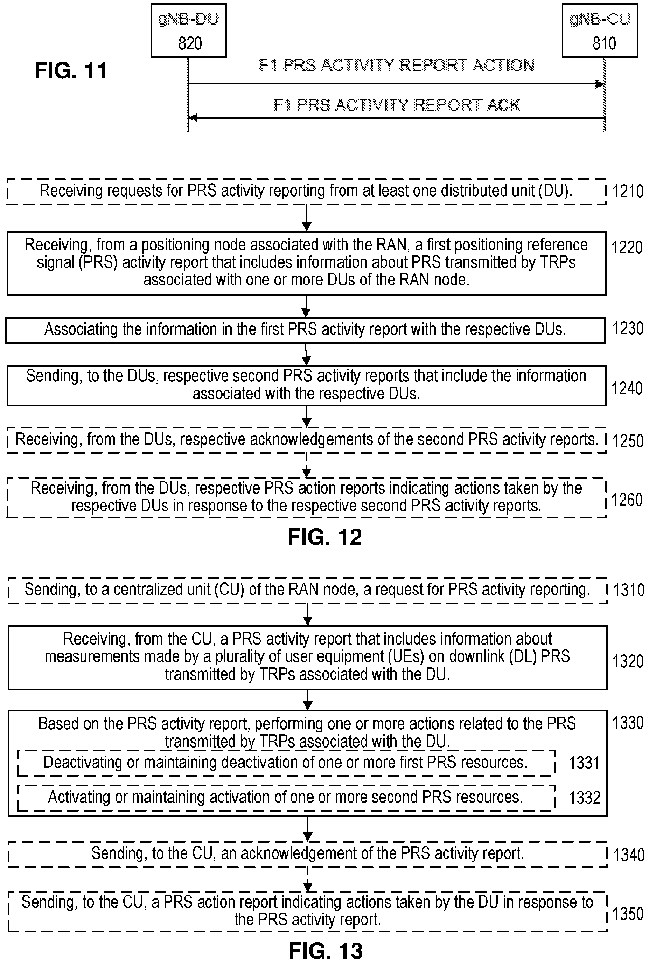

In some embodiments, the gNB-DU may also send a message to the gNB-CU indicating the actions that it took based upon PRS activity report. The action report may include updated DL PRS information such as which DL PRS resources (beams) are activated or operational and which DL PRS resources (beams) are deactivated or non-operational. This action report can be sent in new F1 message or in existing IE such as the DL-PRS information IE described in 3GPP TS 38.473 (v16.3.0). Figure 11 shows an exemplary diagram of a class-1 signaling procedure between gNB-DU (820) and gNB-CU (810) that illustrates these embodiments.

Various features of the claimed embodiments described above correspond to various operations illustrated in Figures 12-13, which show exemplary methods (*e.g.,* procedures) for a CU and a DU, respectively. In other words, various features of the operations described below correspond to various claimed embodiments described above. Furthermore, the exemplary methods shown in Figures 12-13 can be used cooperatively to provide various benefits, advantages, and/or solutions to problems described herein. Although Figures 12-13 show specific blocks in particular orders, the operations of the exemplary methods can be performed in different orders than shown and can be combined and/or divided into blocks having different functionality than shown. Optional blocks or operations are indicated by dashed lines.

In particular, Figure 12 shows an exemplary method (e.g., procedure) for a CU of a radio access network (RAN) node that is associated with one or more TRPs, according to various embodiments of the present disclosure. The exemplary method can be performed by a CU of a RAN node (*e.g.,* base station, eNB, gNB, ng-eNB, *etc.*) such as described elsewhere herein.

The claimed invention includes the operations of block 1220, where the CU receives, from a positioning node associated with the RAN, a first PRS activity report that includes information about measurements made by a plurality of UEs on PRS transmitted by TRPs associated with one or more DUs of the RAN node. For example, the positioning node can be an LMF. The claimed invention further includes the operations of block 1230, where the CU associates the information in the first PRS activity report with respective DUs of the RAN node. The claimed invention finally includes the operations of block 1240, where the CU sends, to the DUs, respective second PRS activity reports that include the information associated with the respective DUs.

In some embodiments, the exemplary method can also include the operations of block 1210, where the CU can receive requests for PRS activity reporting from at least one of the DUs. In such embodiments, the second PRS activity reports are sent to the at least one DU in response to the requests. An example of these embodiments is shown in Figure 10.

In some embodiments, the exemplary method can also include the operations of block 1250, where the CU can receive, from the DUs, respective acknowledgements of the second PRS activity reports. An example of these embodiments is shown in Figure 9.

In some embodiments, the exemplary method can also include the operations of block 1260, where the CU can receive, from the DUs, respective PRS action reports indicating actions taken by the respective DUs in response to the respective second PRS activity reports. An example of these embodiments is shown in Figure 11. In some of these embodiments, each PRS action report includes one or more of the following: an indication of PRS resources or beams that are activated or operational; and an indication of PRS resources or beams that are deactivated or non-operational.

In some embodiments, the first PRS activity report includes a list of PRS resource sets for the TRPs associated with the DUs.

In some of these embodiments, the first PRS activity report can also include the following information associated with each particular one of the PRS resource sets in the list:
- identifiers of PRS resources within the particular PRS resource set; and
- one or more of the following associated with each particular one of the PRS resources within the particular PRS resource set:
   ∘ a number of UEs that have reported reference signal receive power (RSRP) above a threshold for the particular PRS resource,
   ∘ average reported RSRP for the particular PRS resource,
   ∘ average reported reference signal received quality (RSRQ) for the particular PRS resource, and
   ∘ any QCL relationships for the particular PRS resource.

Table 1 above shows an example of these embodiments.

In other of these embodiments, the first PRS activity report can also include the following information associated with each particular one of the PRS resource sets in the list:
- a number of UEs that have reported RSRP above a threshold for the particular PRS resource set,
- average reported RSRP for the particular PRS resource set,
- average reported RSRQ for the particular PRS resource set, and
- any QCL relationships for the particular PRS resource set.

In various embodiments, the CU can associate (e.g., sort, assign, relate, etc.) any of the above-mentioned information in the first PRS activity report with the corresponding DUs, such that the second PRS activity reports will have DU-specific subsets of the information in the first PRS activity report.

In addition, Figure 13 shows an exemplary method (e.g., procedure) for a DU of a RAN node that is associated with one or more TRPs, according to various embodiments of the present disclosure. The exemplary method can be performed by a DU of a RAN node (*e.g.,* base station, eNB, gNB, ng-eNB, *etc.*) such as described elsewhere herein.

The claimed invention includes the operations of block 1320, where the DU receives, from a CU of the RAN node, a PRS activity report that includes information about measurements made by a plurality of UEs on PRS transmitted by TRPs associated with the DU. The claimed invention further includes the operations of block 1330, where the DU, based on the PRS activity report, performs one or more actions related to the PRS transmitted by that TRPs associated with the DU.

In some embodiments, the exemplary method can also include the operations of block 1310, where the DU can send, to the CU, a request for PRS activity reporting. In such embodiments, the PRS activity report can be received in response to the request. An example of these embodiments is shown in Figure 10.

In some embodiments, the exemplary method can also include the operations of block 1340, where the DU can send, to the CU, an acknowledgement of the PRS activity report. An example of these embodiments is shown in Figure 9.

In some embodiments, the exemplary method can also include the operations of block 1350, where the DU can send, to the CU, a PRS action report indicating actions taken by the DU in response to the PRS activity report. An example of these embodiments is shown in Figure 11. In some of these embodiments, the PRS action report includes one or more of the following: an indication of PRS resources or beams that are activated or operational; and an indication of PRS resources or beams that are deactivated or non-operational.

In some embodiments, the PRS activity report includes a list of PRS resource sets for the TRPs associated with the DU.

In some of these embodiments, the PRS activity report can also include the following information associated with each particular one of the PRS resource sets in the list:
- identifiers of PRS resources within the particular PRS resource set; and
- one or more of the following associated with each of the PRS resources:
   ∘ a number of UEs that have reported RSRP above a threshold for the particular PRS resource,
   ∘ average reported RSRP for the particular PRS resource,
   ∘ average reported RSRQ for the particular PRS resource, and
   ∘ any QCL relationships for the particular PRS resource.

Table 1 above shows an example of these embodiments.

In other of these embodiments, the PRS activity report can also include the following information associated with each particular one of the PRS resource sets in the list:
- a number of UEs that have reported RSRP above a threshold for the particular PRS resource set,
- average reported RSRP for the particular PRS resource set,
- average reported RSRQ for the particular PRS resource set, and
- any QCL relationships for the particular PRS resource set.

In some embodiments, performing the one or more actions (e.g., in block 1330) based on the PRS activity report can include any of the following operations, labelled with respective sub-block numbers:
- (1331) deactivating or maintaining deactivation of one or more first PRS resources indicated by the PRS activity report; and
- (1332) activating or maintaining activation of one or more second PRS resources indicated by the PRS activity report.

In some of these embodiments, the one or more first PRS resources are indicated by the PRS activity report as having no UE measurements or UE measurements that do not meet one or more criteria. Likewise, the one or more second PRS resources are indicated by the PRS activity report as having UE measurements that meet the one or more criteria. In some of these embodiments, the one or more criteria include any of the following:
- a RSRP threshold;
- a number of UEs that have reported RSRP above the RSRP threshold;
- an average reported RSRP relative to the RSRP threshold;
- a RSRQ threshold;
- a number of UEs that have reported RSRQ above the RSRQ threshold; and
- an average reported RSRQ relative to the RSRQ threshold;

In some of these embodiments, the one or more criteria apply to each PRS resource or to each PRS resource set comprising a plurality of PRS resources.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

Figure 14 shows a block diagram of an exemplary wireless device or user equipment (UE) 1400 (hereinafter referred to as "UE 1400") according to various embodiments of the present disclosure, including those described above with reference to other figures. For example, UE 1400 can be configured by execution of instructions, stored on a computer-readable medium, to perform operations corresponding to one or more of the exemplary methods described herein.

UE 1400 can include a processor 1410 (also referred to as "processing circuitry") that can be operably connected to a program memory 1420 and/or a data memory 1430 via a bus 1470 that can comprise parallel address and data buses, serial ports, or other methods and/or structures known to those of ordinary skill in the art. Program memory 1420 can store software code, programs, and/or instructions (collectively shown as computer program product (CPP) 1421 in Figure 14) that, when executed by processor 1410, can configure and/or facilitate UE 1400 to perform various operations, including operations corresponding to various exemplary methods described herein. As part of or in addition to such operations, execution of such instructions can configure and/or facilitate UE 1400 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.,* or any other current or future protocols that can be utilized in conjunction with radio transceiver 1440, user interface 1450, and/or control interface 1460.

As another example, processor 1410 can execute program code stored in program memory 1420 that corresponds to MAC, RLC, PDCP, SDAP, RRC, and NAS layer protocols standardized by 3GPP (*e.g.,* for NR and/or LTE). As a further example, processor 1410 can execute program code stored in program memory 1420 that, together with radio transceiver 1440, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 1410 can execute program code stored in program memory 1420 that, together with radio transceiver 1440, implements device-to-device (D2D) communications with other compatible devices and/or UEs.

Program memory 1420 can also include software code executed by processor 1410 to control the functions of UE 1400, including configuring and controlling various components such as radio transceiver 1440, user interface 1450, and/or control interface 1460. Program memory 1420 can also comprise one or more application programs and/or modules comprising computer-executable instructions embodying any of the exemplary methods described herein. Such software code can be specified or written using any known or future developed programming language, such as *e.g.,* Java, C++, C, Objective C, HTML, XHTML, machine code, and Assembler, as long as the desired functionality, *e.g.,* as defined by the implemented method steps, is preserved. In addition, or as an alternative, program memory 1420 can comprise an external storage arrangement (not shown) remote from UE 1400, from which the instructions can be downloaded into program memory 1420 located within or removably coupled to UE 1400, so as to enable execution of such instructions.

Data memory 1430 can include memory area for processor 1410 to store variables used in protocols, configuration, control, and other functions of UE 1400, including operations corresponding to, or comprising, any of the exemplary methods described herein. Moreover, program memory 1420 and/or data memory 1430 can include non-volatile memory (*e.g.,* flash memory), volatile memory (*e.g.,* static or dynamic RAM), or a combination thereof. Furthermore, data memory 1430 can comprise a memory slot by which removable memory cards in one or more formats (*e.g.,* SD Card, Memory Stick, Compact Flash, *etc.*) can be inserted and removed.

Persons of ordinary skill will recognize that processor 1410 can include multiple individual processors (including, *e.g.,* multi-core processors), each of which implements a portion of the functionality described above. In such cases, multiple individual processors can be commonly connected to program memory 1420 and data memory 1430 or individually connected to multiple individual program memories and or data memories. More generally, persons of ordinary skill in the art will recognize that various protocols and other functions of UE 1400 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 1440 can include radio-frequency transmitter and/or receiver functionality that facilitates the UE 1400 to communicate with other equipment supporting like wireless communication standards and/or protocols. In some embodiments, the radio transceiver 1440 includes one or more transmitters and one or more receivers that enable UE 1400 to communicate according to various protocols and/or methods proposed for standardization by 3GPP and/or other standards bodies. For example, such functionality can operate cooperatively with processor 1410 to implement a PHY layer based on OFDM, OFDMA, and/or SC-FDMA technologies, such as described herein with respect to other figures.

In some embodiments, radio transceiver 1440 includes one or more transmitters and one or more receivers that can facilitate the UE 1400 to communicate with various LTE, LTE-Advanced (LTE-A), and/or NR networks according to standards promulgated by 3GPP. In some embodiments of the present disclosure, the radio transceiver 1440 includes circuitry, firmware, *etc.* necessary for the UE 1400 to communicate with various NR, NR-U, LTE, LTE-A, LTE-LAA, UMTS, and/or GSM/EDGE networks, also according to 3GPP standards. In some embodiments, radio transceiver 1440 can include circuitry supporting D2D communications between UE 1400 and other compatible devices.

In some embodiments, radio transceiver 1440 includes circuitry, firmware, *etc.* necessary for the UE 1400 to communicate with various CDMA2000 networks, according to 3GPP2 standards. In some embodiments, the radio transceiver 1440 can be capable of communicating using radio technologies that operate in unlicensed frequency bands, such as IEEE 802.11 WiFi that operates using frequencies in the regions of 2.4, 5.6, and/or 60 GHz. In some embodiments, radio transceiver 1440 can include a transceiver that is capable of wired communication, such as by using IEEE 802.3 Ethernet technology. The functionality particular to each of these embodiments can be coupled with and/or controlled by other circuitry in the UE 1400, such as the processor 1410 executing program code stored in program memory 1420 in conjunction with, and/or supported by, data memory 1430.

User interface 1450 can take various forms depending on the particular embodiment of UE 1400 or can be absent from UE 1400 entirely. In some embodiments, user interface 1450 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 1400 can comprise a tablet computing device including a larger touchscreen display. In such embodiments, one or more of the mechanical features of the user interface 1450 can be replaced by comparable or functionally equivalent virtual user interface features (*e.g.,* virtual keypad, virtual buttons, *etc.*) implemented using the touchscreen display, as familiar to persons of ordinary skill in the art. In other embodiments, the UE 1400 can be a digital computing device, such as a laptop computer, desktop computer, workstation, *etc.* that comprises a mechanical keyboard that can be integrated, detached, or detachable depending on the particular embodiment. Such a digital computing device can also comprise a touch screen display. Many embodiments of the UE 1400 having a touch screen display are capable of receiving user inputs, such as inputs related to exemplary methods described herein or otherwise known to persons of ordinary skill.

In some embodiments, UE 1400 can include an orientation sensor, which can be used in various ways by features and functions of UE 1400. For example, the UE 1400 can use outputs of the orientation sensor to determine when a user has changed the physical orientation of the UE 1400's touch screen display. An indication signal from the orientation sensor can be available to any application program executing on the UE 1400, such that an application program can change the orientation of a screen display (*e.g.,* from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various embodiments of the present disclosure.

A control interface 1460 of the UE 1400 can take various forms depending on the particular embodiment of UE 1400 and of the particular interface requirements of other devices that the UE 1400 is intended to communicate with and/or control. For example, the control interface 1460 can comprise an RS-232 interface, a USB interface, an HDMI interface, a Bluetooth interface, an IEEE ("Firewire") interface, an I²C interface, a PCMCIA interface, or the like. In some embodiments of the present disclosure, control interface 1460 can comprise an IEEE 802.3 Ethernet interface such as described above. In some embodiments of the present disclosure, the control interface 1460 can comprise analog interface circuitry including, for example, one or more digital-to-analog converters (DACs) and/or analog-to-digital converters (ADCs).

Persons of ordinary skill in the art can recognize the above list of features, interfaces, and radio-frequency communication standards is merely exemplary, and not limiting to the scope of the present disclosure. In other words, the UE 1400 can comprise more functionality than is shown in Figure 14 including, for example, a video and/or still-image camera, microphone, media player and/or recorder, *etc.* Moreover, radio transceiver 1440 can include circuitry necessary to communicate using additional radio-frequency communication standards including Bluetooth, GPS, and/or others. Moreover, the processor 1410 can execute software code stored in the program memory 1420 to control such additional functionality. For example, directional velocity and/or position estimates output from a GPS receiver can be available to any application program executing on the UE 1400, including any program code corresponding to and/or embodying any embodiments (*e.g.,* of methods) described herein.

Figure 15 shows a block diagram of an exemplary network node 1500 according to various embodiments of the present disclosure, including those described above with reference to other figures. For example, exemplary network node 1500 can be configured by execution of instructions, stored on a computer-readable medium, to perform operations corresponding to one or more of the exemplary methods described herein. In some embodiments, network node 1500 can comprise a base station, eNB, gNB, or one or more components thereof. For example, network node 1500 can be configured as a central unit (CU) and one or more distributed units (DUs) according to NR gNB architectures specified by 3GPP. More generally, the functionally of network node 1500 can be distributed across various physical devices and/or functional units, modules, *etc.*

Network node 1500 can include processor 1510 (also referred to as "processing circuitry") that is operably connected to program memory 1520 and data memory 1530 via bus 1570, which can include parallel address and data buses, serial ports, or other methods and/or structures known to those of ordinary skill in the art.

Program memory 1520 can store software code, programs, and/or instructions (collectively shown as computer program product (CPP) 1521 in Figure 15) that, when executed by processor 1510, can configure and/or facilitate network node 1500 to perform various operations, including operations corresponding to various exemplary methods described herein. As part of and/or in addition to such operations, program memory 1520 can also include software code executed by processor 1510 that can configure and/or facilitate network node 1500 to communicate with one or more other UEs or network nodes using other protocols or protocol layers, such as one or more of the PHY, MAC, RLC, PDCP, SDAP, RRC, and NAS layer protocols standardized by 3GPP for LTE, LTE-A, and/or NR, or any other higher-layer protocols utilized in conjunction with radio network interface 1540 and/or core network interface 1550 (which can be referred to collectively as "communication interface"). For example, core network interface 1550 can comprise the S1 or NG interface and radio network interface 1540 can comprise the Uu interface, as standardized by 3GPP. Program memory 1520 can also comprise software code executed by processor 1510 to control the functions of network node 1500, including configuring and controlling various components such as radio network interface 1540 and core network interface 1550.

Data memory 1530 can comprise memory area for processor 1510 to store variables used in protocols, configuration, control, and other functions of network node 1500. As such, program memory 1520 and data memory 1530 can comprise non-volatile memory (*e.g.,* flash memory, hard disk, *etc.*), volatile memory (*e.g.,* static or dynamic RAM), network-based (*e.g.,* "cloud") storage, or a combination thereof. Persons of ordinary skill in the art will recognize that processor 1510 can include multiple individual processors (not shown), each of which implements a portion of the functionality described above. In such case, multiple individual processors may be commonly connected to program memory 1520 and data memory 1530 or individually connected to multiple individual program memories and/or data memories. More generally, persons of ordinary skill will recognize that various protocols and other functions of network node 1500 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1540 can comprise transmitters, receivers, signal processors, ASICs, antennas, beamforming units, and other circuitry that enables network node 1500 to communicate with other equipment such as, in some embodiments, a plurality of compatible user equipment (UE). In some embodiments, interface 1540 can also enable network node 1500 to communicate with compatible satellites of a satellite communication network. In some embodiments, radio network interface 1540 can comprise various protocols or protocol layers, such as the PHY, MAC, RLC, PDCP, and/or RRC layer protocols standardized by 3GPP for LTE, LTE-A, LTE-LAA, NR, NR-U, *etc.*; improvements thereto such as described herein above; or any other higher-layer protocols utilized in conjunction with radio network interface 1540. According to further embodiments of the present disclosure, the radio network interface 1540 can comprise a PHY layer based on OFDM, OFDMA, and/or SC-FDMA technologies. In some embodiments, the functionality of such a PHY layer can be provided cooperatively by radio network interface 1540 and processor 1510 (including program code in memory 1520).

Core network interface 1550 can comprise transmitters, receivers, and other circuitry that enables network node 1500 to communicate with other equipment in a core network such as, in some embodiments, circuit-switched (CS) and/or packet-switched Core (PS) networks. In some embodiments, core network interface 1550 can comprise the S1 interface standardized by 3GPP. In some embodiments, core network interface 1550 can comprise the NG interface standardized by 3GPP. In some embodiments, core network interface 1550 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1550 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

In some embodiments, network node 1500 can include hardware and/or software that configures and/or facilitates network node 1500 to communicate with other network nodes in a RAN (also referred to as a "wireless network"), such as with other eNBs, gNBs, ng-eNBs, en-gNBs, IAB nodes, CUs, DUs, *etc.* Such hardware and/or software can be part of radio network interface 1540 and/or core network interface 1550, or it can be a separate functional unit (not shown). For example, such hardware and/or software can configure and/or facilitate network node 1500 to communicate with other RAN nodes via the X2, Xn, and/or F1 interfaces standardized by 3GPP.

OA&M interface 1560 can comprise transmitters, receivers, and other circuitry that enables network node 1500 to communicate with external networks, computers, databases, and the like for purposes of operations, administration, and maintenance of network node 1500 or other network equipment operably connected thereto. Lower layers of OA&M interface 1560 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1540, core network interface 1550, and OA&M interface 1560 may be multiplexed together on a single physical interface, such as the examples listed above.

Figure 16 is a block diagram of an exemplary communication network configured to provide over-the-top (OTT) data services between a host computer and a user equipment (UE), according to one or more embodiments of the present disclosure. UE 1610 can communicate with radio access network (RAN) 1630 over radio interface 1620, which can be based on protocols described above including, *e.g.,* LTE, LTE-A, and 5G/NR. For example, UE 1610 can be configured and/or arranged as shown in other figures discussed above.

RAN 1630 can include one or more network nodes (*e.g.,* base stations, eNBs, gNBs, controllers, *etc.*) operable in licensed spectrum bands, as well one or more network nodes operable in unlicensed spectrum (using, *e.g.,* LAA or NR-U technology), such as a 2.4-GHz band and/or a 5-GHz band. In such cases, the network nodes comprising RAN 1630 can cooperatively operate using licensed and unlicensed spectrum. In some embodiments, RAN 1630 can include, or be capable of communication with, one or more satellites comprising a satellite access network.

RAN 1630 can further communicate with core network 1640 according to various protocols and interfaces described above. For example, one or more apparatus (*e.g.,* base stations, eNBs, gNBs, *etc.*) comprising RAN 1630 can communicate to core network 1640 via core network interface 1650 described above. In some embodiments, RAN 1630 and core network 1640 can be configured and/or arranged as shown in other figures discussed above. For example, eNBs comprising an evolved UTRAN (E-UTRAN) 1630 can communicate with an evolved packet core (EPC) network 1640 via an S1 interface. As another example, gNBs and ng-eNBs comprising an NG-RAN 1630 can communicate with a 5GC network 1630 via an NG interface.

Core network 1640 can further communicate with an external packet data network, illustrated in Figure 16 as Internet 1650, according to various protocols and interfaces known to persons of ordinary skill in the art. Many other devices and/or networks can also connect to and communicate via Internet 1650, such as exemplary host computer 1660. In some embodiments, host computer 1660 can communicate with UE 1610 using Internet 1650, core network 1640, and RAN 1630 as intermediaries. Host computer 1660 can be a server (*e.g.,* an application server) under ownership and/or control of a service provider. Host computer 1660 can be operated by the OTT service provider or by another entity on the service provider's behalf.

For example, host computer 1660 can provide an over-the-top (OTT) packet data service to UE 1610 using facilities of core network 1640 and RAN 1630, which can be unaware of the routing of an outgoing/incoming communication to/from host computer 1660. Similarly, host computer 1660 can be unaware of routing of a transmission from the host computer to the UE, *e.g.,* the routing of the transmission through RAN 1630. Various OTT services can be provided using the exemplary configuration shown in Figure 16 including, *e.g.,* streaming (unidirectional) audio and/or video from host computer to UE, interactive (bidirectional) audio and/or video between host computer and UE, interactive messaging or social communication, interactive virtual or augmented reality, cloud gaming, *etc.*

The exemplary network shown in Figure 16 can also include measurement procedures and/or sensors that monitor network performance metrics including data rate, latency and other factors that are improved by embodiments disclosed herein. The exemplary network can also include functionality for reconfiguring the link between the endpoints (*e.g.,* host computer and UE) in response to variations in the measurement results. Such procedures and functionalities are known and practiced; if the network hides or abstracts the radio interface from the OTT service provider, measurements can be facilitated by proprietary signaling between the UE and the host computer.

Embodiments described herein provide flexible and efficient signaling techniques (e.g., via F1-AP interface) between CU and DU to support allocation of positioning reference signal (PRS) resources to meet energy-efficiency goals. Such techniques are transparent to UEs and do not impact UE implementation or require standardization of new UE procedures (e.g., in RRC). As such, legacy UEs can also benefit. In addition, such techniques reduce PRS transmission overhead, energy consumption, and interference, since PRS activity reports include information that enables RAN nodes to selectively transmit PRS beams only to coverage areas with UEs needing such beams and to turn off PRS beams in other coverage areas. Accordingly, embodiments can improve positioning methods based on DL PRS.

When used in split RAN nodes (*e.g.,* gNBs comprising RAN 1430), embodiments described herein can provide various improvements, benefits, and/or advantages that facilitate the use of location-based OTT services. As a consequence, this improves the performance of these services as experienced by OTT service providers and end-users, including more precise delivery of services with lower latency without excessive UE power consumption or other reductions in user experience.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (*e.g.,* "data" and "information"). It should be understood, that although these terms (and/or other terms that can be synonymous to one another) can be used synonymously herein, there can be instances when such words can be intended to not be used synonymously.

## Claims

1. A method for a centralized unit, CU, of a radio access network, RAN, node that is associated with one or more transmission reception points, TRPs, the method comprising:
receiving (1220), from a positioning node associated with the RAN, a first positioning reference signal, PRS, activity report that includes information about PRS transmitted by TRPs associated with one or more distributed units, DUs, of the RAN node;
associating (1230) the information in the first PRS activity report with respective DUs of the RAN node; and
sending (1240), to the DUs, respective second PRS activity reports that include the information associated with the respective DUs, such that the second PRS activity reports will have DU-specific subsets of the information in the first PRS activity report.

2. The method of claim 1, further comprising receiving (1250), from the DUs, respective acknowledgements of the second PRS activity reports.

3. The method of any of claims 1-2, further comprising receiving (1260), from the DUs, respective PRS action reports indicating actions related to the PRS transmitted by TRPs associated with the respective DUs, taken by the respective DUs in response to the respective second PRS activity reports.

4. A method for a distributed unit, DU, of a radio access network, RAN, node that is associated with one or more transmission reception points, TRPs, the method comprising:
receiving (1320), from a centralized unit, CU, of the RAN node, a positioning reference signal, PRS, activity report that includes information about PRS transmitted by TRPs associated with the DU; and
based on the PRS activity report, performing (1330) one or more actions related to the PRS transmitted by the TRPs associated with the DU,
wherein performing (1330) the one or more actions based on the PRS activity report includes one or more of the following:
deactivating or maintaining deactivation of (1331) one or more first PRS resources indicated by the PRS activity report; and
activating or maintaining activation of (1332) one or more second PRS resources indicated by the PRS activity report.

5. The method of claim 4, further comprising sending (1340), to the CU, an acknowledgement of the PRS activity report.

6. The method of any of claims 4-5, further comprising sending (1350), to the CU, a PRS action report indicating the actions related to PRS transmitted by TRPs associated with the DU, taken by the DU in response to the PRS activity report.

7. The method of claim 6, wherein the PRS action report includes one or more of the following:
an indication of PRS resources or beams that are activated or operational; and
an indication of PRS resources or beams that are deactivated or non-operational.

8. The method of any of claims 4-7, wherein the PRS activity report includes a list of PRS resource sets for the TRPs associated with the DU.

9. The method of claim 8, wherein the PRS activity report also includes the following information associated with each particular one of the PRS resource sets in the list:
identifiers of PRS resources within the particular PRS resource set; and
one or more of the following associated with each particular one of the PRS resources within the particular PRS resource set:
a number of UEs that have reported reference signal receive power, RSRP, above a threshold for the particular PRS resource;
average reported RSRP for the particular PRS resource;
average reported reference signal received quality, RSRQ, for the particular PRS resource; and
any quasi-colocation, QCL, relationships for the particular PRS resource.

10. The method of claim 8, wherein the PRS activity report also includes the following information associated with each particular one of the PRS resource sets in the list:
a number of UEs that have reported reference signal receive power, RSRP, above a threshold for the particular PRS resource set;
average reported RSRP for the particular PRS resource set;
average reported reference signal received quality, RSRQ, for the particular PRS resource set; and
any quasi-colocation, QCL, relationships for the particular PRS resource set.

11. The method of any of claims 4-10, wherein:
the one or more first PRS resources are indicated by the PRS activity report as having no UE measurements or UE measurements that do not meet one or more criteria; and
the one or more second PRS resources are indicated by the PRS activity report as having UE measurements that meet the one or more criteria.

12. The method of claim 11, wherein the one or more criteria include any of the following:
a reference signal received power, RSRP, threshold;
a number of UEs that have reported RSRP above the RSRP threshold;
an average reported RSRP relative to the RSRP threshold;
a reference signal received quality, RSRQ, threshold;
a number of UEs that have reported RSRQ above the RSRQ threshold; and
an average reported RSRQ relative to the RSRQ threshold;

13. The method of any of claims 11-12, wherein one or more criteria apply to one of the following: each PRS resource, or each PRS resource set comprising a plurality of PRS resources.

14. A centralized unit, CU (110, 510, 810, 1500) of a radio access network, RAN, node (100, 210, 220, 422, 500) that is associated with one or more transmission reception points, TRPs (422a, 422b, 521, 531), the CU being further configured to:
receiving, from a positioning node (440, 1500) associated with the RAN, a first positioning reference signal, PRS, activity report that includes information about PRS transmitted by TRPs associated with one or more distributed units, DUs (120, 130, 520, 530, 820, 1500) of the RAN node;
associating the information in the first PRS activity report with respective DUs of the RAN node; and
sending, to the DUs, respective second PRS activity reports that include the information associated with the respective DUs, such that the second PRS activity reports will have DU-specific subsets of the information in the first PRS activity report.

15. The CU of claim 14, being further configured to perform operations corresponding to any of the methods of claims 2-3.

16. A distributed unit, DU (120, 130, 520, 530, 820, 1500) of a radio access network, RAN, node (100, 210, 220, 422, 500) that is associated with one or more transmission reception points, TRPs (422a, 422b, 521, 531), the DU being configured to:
receive, from a centralized unit, CU (110, 510, 810, 1500) of the RAN node, a positioning reference signal, PRS, activity report that includes information about PRS transmitted by TRPs associated with the DU; and
based on the PRS activity report, perform one or more actions related to the PRS transmitted by the TRPs associated with the DU,
wherein performing the one or more actions based on the PRS activity report includes one or more of the following:
deactivating or maintaining deactivation of one or more first PRS resources indicated by the PRS activity report; and
activating or maintaining activation of one or more second PRS resources indicated by the PRS activity report.

17. The DU of claim 16, being further configured to perform operations corresponding to any of the methods of claims 5-13.

18. A non-transitory, computer-readable medium (1520) storing computer-executable instructions that, when executed by processing circuitry (1510) of a distributed unit, DU (120, 130, 520, 530, 820, 1500) of a radio access network, RAN, node (100, 210, 220, 422, 500) that is associated with one or more transmission reception points, TRPs (422a, 422b, 521, 531), configure the DU to perform operations corresponding to any of the methods of claims 4-13.

19. A computer program product (1521) comprising computer-executable instructions that, when executed by processing circuitry (1510) of a distributed unit, DU (120, 130, 520, 530, 820, 1500) of a radio access network, RAN, node (100, 210, 220, 422, 500) that is associated with one or more transmission reception points, TRPs (422a, 422b, 521, 531), configure the DU to perform operations corresponding to any of the methods of claims 4-13.

## Patentansprüche

1. Verfahren für eine zentralisierte Einheit, CU, eines Funkzugangsnetzknotens, RAN-Knoten, der mit einem oder mehreren Übertragungsempfangspunkten, TRPs, verknüpft ist, wobei das Verfahren Folgendes umfasst:
Empfangen (1220), von einem Positionierungsknoten, der mit dem RAN verknüpft ist, eines ersten Positionierungsreferenzsignal-Aktivitätsberichts, PRS-Aktivitätsbericht, der Informationen über PRS beinhaltet, die von TRPs übertragen werden, die mit einer oder mehreren verteilten Einheiten, DUs, des RAN-Knotens verknüpft sind;
Verknüpfen (1230) der Informationen in dem ersten PRS-Aktivitätsbericht mit jeweiligen DUs des RAN-Knotens; und
Senden (1240), an die DUs, jeweiliger zweiter PRS-Aktivitätsberichte, welche die mit den jeweiligen DUs verknüpften Informationen beinhalten, derart, dass die zweiten PRS-Aktivitätsberichte DU-spezifische Untergruppen der Informationen in dem ersten PRS-Aktivitätsbericht aufweisen.

2. Verfahren nach Anspruch 1, ferner umfassend Empfangen (1250), von den DUs, jeweiliger Bestätigungen der zweiten PRS-Aktivitätsberichte.

3. Verfahren nach einem der Ansprüche 1-2, ferner umfassend Empfangen (1260), von den DUs, jeweiliger PRS-Aktionsberichte, die Aktionen angeben mit Bezug zu den PRS, die von TRPs übertragen werden, die mit den jeweiligen DUs verknüpft sind, und die von den jeweiligen DUs als Reaktion auf die jeweiligen zweiten PRS-Aktivitätsberichte ergriffen werden.

4. Verfahren für eine verteilte Einheit, DU, eines Funkzugangsnetzknotens, RAN-Knoten, der mit einem oder mehreren Übertragungsempfangspunkten, TRPs, verknüpft ist, wobei das Verfahren Folgendes umfasst:
Empfangen (1320), von einer zentralisierten Einheit, CU, des RAN-Knotens, eines Positionierungsreferenzsignal-Aktivitätsberichts, PRS-Aktivitätsbericht, der Informationen über PRS beinhaltet, die von TRPs übertragen werden, die mit der DU verknüpft sind; und
basierend auf dem PRS-Aktivitätsbericht, Durchführen (1330) einer oder mehrerer Aktionen mit Bezug zu den PRS, die von den TRPs übertragen werden, die mit der DU verknüpft sind,
wobei Durchführen (1330) der einen oder mehreren Aktionen basierend auf dem PRS-Aktivitätsbericht eines oder mehrere der Folgenden beinhaltet:
Deaktivieren oder Beibehalten der Deaktivierung (1331) einer oder mehrerer erster PRS-Ressourcen, die von dem PRS-Aktivitätsbericht angegeben werden; und
Aktivieren oder Beibehalten der Aktivierung (1332) einer oder mehrerer zweiter PRS-Ressourcen, die von dem PRS-Aktivitätsbericht angegeben werden.

5. Verfahren nach Anspruch 4, ferner umfassend Senden (1340), an die CU, einer Bestätigung des PRS-Aktivitätsberichts.

6. Verfahren nach einem der Ansprüche 4-5, ferner umfassend Senden (1350), an die CU, eines PRS-Aktionsberichts, der die Aktionen angibt mit Bezug zu PRS, die von TRPs übertragen werden, die mit der DU verknüpft sind, und die von der DU als Reaktion auf den PRS-Aktivitätsbericht ergriffen werden.

7. Verfahren nach Anspruch 6, wobei der PRS-Aktionsbericht eines oder mehrere der Folgenden beinhaltet:
eine Angabe von PRS-Ressourcen oder -Strahlen, die aktiviert oder betriebsbereit sind; und
eine Angabe von PRS-Ressourcen oder -Strahlen, die deaktiviert oder nicht betriebsbereit sind.

8. Verfahren nach einem der Ansprüche 4-7, wobei der PRS-Aktivitätsbericht eine Liste von PRS-Ressourcensätzen für die TRPs umfasst, die mit der DU verknüpft sind.

9. Verfahren nach Anspruch 8, wobei der PRS-Aktivitätsbericht auch die folgenden Informationen beinhaltet, die mit jedem einzelnen der PRS-Ressourcensätze in der Liste verknüpft sind:
Kennungen von PRS-Ressourcen innerhalb des einzelnen PRS-Ressourcensatzes; und
eines oder mehrere der Folgenden, die mit jeder einzelnen der PRS-Ressourcen innerhalb des einzelnen PRS-Ressourcensatzes verknüpft sind:
eine Anzahl von UEs, die eine Referenzsignal-Empfangsleistung, RSRP, über einem Schwellenwert für die einzelne PRS-Ressource gemeldet haben;
durchschnittlich gemeldete RSRP für die einzelne PRS-Ressource;
durchschnittlich gemeldete Referenzsignal-Empfangsqualität, RSRQ, für die einzelne PRS-Ressource; und
beliebige Quasi-Colocation-Beziehungen, QCL-Beziehungen, für die einzelne PRS-Ressource.

10. Verfahren nach Anspruch 8, wobei der PRS-Aktivitätsbericht ferner die folgenden Informationen beinhaltet, die mit jedem einzelnen der PRS-Ressourcensätze in der Liste verknüpft sind:
Anzahl von UEs, die eine Referenzsignal-Empfangsleistung, RSRP, über einem Schwellenwert für den einzelnen PRS-Ressourcensatz gemeldet haben;
durchschnittlich gemeldete RSRP für den einzelnen PRS-Ressourcensatz;
durchschnittlich gemeldete Referenzsignal-Empfangsqualität, RSRQ, für den einzelnen PRS-Ressourcensatz; und
beliebige Quasi-Colocation-Beziehungen, QCL-Beziehungen, für den einzelnen PRS-Ressourcensatz.

11. Verfahren nach einem der Ansprüche 4-10, wobei:
der PRS-Aktivitätsbericht angibt, dass die eine oder die mehreren ersten PRS-Ressourcen keine UE-Messungen oder UE-Messungen aufweisen, die ein oder mehrere Kriterien nicht erfüllen; und
der PRS-Aktivitätsbericht angibt, dass die eine oder die mehreren zweiten PRS-Ressourcen UE-Messungen aufweisen, die das eine oder die mehreren Kriterien erfüllen.

12. Verfahren nach Anspruch 11, wobei das eine oder die mehreren Kriterien beliebige der Folgenden beinhalten:
einen Referenzsignal-Empfangsleistungs-Schwellenwert, RSRP-Schwellenwert;
eine Anzahl von UEs, die eine RSRP über dem RSRP-Schwellenwert gemeldet haben;
eine durchschnittliche gemeldete RSRP relativ zu dem RSRP-Schwellenwert;
einen Referenzsignal-Empfangsqualitäts-Schwellenwert, RSRQ-Schwellenwert;
eine Anzahl von UEs, die eine RSRQ über dem RSRQ-Schwellenwert gemeldet haben; und
eine durchschnittliche gemeldete RSRQ relativ zu dem RSRQ-Schwellenwert.

13. Verfahren nach einem der Ansprüche 11-12, wobei eines oder mehrere Kriterien auf eines der Folgenden zutreffen: jede PRS-Ressource, oder jeden PRS-Ressourcensatz, der eine Vielzahl von PRS-Ressourcen umfasst.

14. Zentralisierte Einheit, CU, (110, 510, 810, 1500) eines Funkzugangsnetzknotens, RAN-Knoten, (100, 210, 220, 422, 500), der mit einem oder mehreren Übertragungsempfangspunkten, TRPs, (422a, 422b, 521, 531) verknüpft ist, wobei die CU ferner zu Folgendem konfiguriert ist:
Empfangen, von einem Positionierungsknoten (440, 1500), der mit dem RAN verknüpft ist, eines ersten Positionierungsreferenzsignal-Aktivitätsberichts, PRS-Aktivitätsbericht, der Informationen über PRS beinhaltet, die von TRPs übertragen werden, die mit einer oder mehreren verteilten Einheiten, DUs, (120, 130, 520, 530, 820, 1500) des RAN-Knotens verknüpft sind;
Verknüpfen der Informationen in dem ersten PRS-Aktivitätsbericht mit jeweiligen DUs des RAN-Knotens; und
Senden, an die DUs, jeweiliger zweiter PRS-Aktivitätsberichte, welche die mit den jeweiligen DUs verknüpften Informationen beinhalten, derart, dass die zweiten PRS-Aktivitätsberichte DU-spezifische Untergruppen der Informationen in dem ersten PRS-Aktivitätsbericht aufweisen.

15. CU nach Anspruch 14, die ferner dazu konfiguriert ist, Operationen entsprechend einem der Verfahren nach den Ansprüchen 2-3 durchzuführen.

16. Verteilte Einheit, DU, (120, 130, 520, 530, 820, 1500) eines Funkzugangsnetzknotens, RAN-Knoten, (100, 210, 220, 422, 500), der mit einem oder mehreren Übertragungsempfangspunkten, TRPs, (422a, 422b, 521, 531) verknüpft ist, wobei die DU zu Folgendem konfiguriert ist:
Empfangen, von einer zentralisierten Einheit, CU, (110, 510, 810, 1500) des RAN-Knotens, eines Positionierungsreferenzsignal-Aktivitätsberichts, PRS-Aktivitätsbericht, der Informationen über PRS beinhaltet, die von TRPs übertragen werden, die mit der DU, verknüpft sind; und
basierend auf dem PRS-Aktivitätsbericht, Durchführen einer oder mehrerer Aktionen mit Bezug zu den PRS, die von den TRPs übertragen werden, die mit der DU verknüpft sind,
wobei Durchführen der einen oder mehreren Aktionen basierend auf dem PRS-Aktivitätsbericht eines oder mehrere der Folgenden beinhaltet:
Deaktivieren oder Beibehalten der Deaktivierung einer oder mehrerer erster PRS-Ressourcen, die von dem PRS-Aktivitätsbericht angegeben werden; und
Aktivieren oder Beibehalten der Aktivierung einer oder mehrerer zweiter PRS-Ressourcen, die von dem PRS-Aktivitätsbericht angegeben werden.

17. DU nach Anspruch 16, die ferner dazu konfiguriert ist, Operationen entsprechend einem der Verfahren nach den Ansprüchen 5-13 durchzuführen.

18. Nicht flüchtiges, computerlesbares Medium (1520), das computerausführbare Anweisungen speichert, die, wenn sie ausgeführt werden durch Verarbeitungsschaltkreise (1510) einer verteilten Einheit, DU, (120, 130, 520, 530, 820, 1500) eines Funkzugangsnetzknotens, RAN-Knoten, (100, 210, 220, 422, 500), der mit einem oder mehreren Übertragungsempfangspunkten, TRPs, (422a, 422b, 521, 531) verknüpft ist, die DU dazu konfigurieren, Operationen entsprechend einem der Verfahren nach den Ansprüchen 4-13 durchzuführen.

19. Computerprogrammprodukt (1521), umfassend computerausführbare Anweisungen, die, wenn sie ausgeführt werden durch Verarbeitungsschaltkreise (1510) einer verteilten Einheit, DU, (120, 130, 520, 530, 820, 1500) eines Funkzugangsnetzknotens, RAN-Knoten, (100, 210, 220, 422, 500), der mit einem oder mehreren Übertragungsempfangspunkten, TRPs, (422a, 422b, 521, 531) verknüpft ist, die DU dazu konfigurieren, Operationen entsprechend einem der Verfahren nach den Ansprüchen 4-13 durchzuführen.

## Revendications

1. Procédé pour une unité centralisée, CU, d'un noeud de réseau d'accès radio, RAN, qui est associé à un ou plusieurs points de réception-transmission, TRP, le procédé comprenant :
la réception (1220), provenant d'un noeud de positionnement associé au RAN, d'un premier rapport d'activité du signal de référence de positionnement, PRS, qui comporte des informations sur le PRS transmis par des TRP associés à une ou plusieurs unités distribuées, DU, du noeud RAN ;
l'association (1230) des informations dans le premier rapport d'activité PRS à des DU respectives du noeud RAN ; et
l'envoi (1240), aux DU, de seconds rapports d'activité PRS respectifs qui comportent les informations associées aux DU respectives, de sorte que les seconds rapports d'activité PRS auront des sous-ensembles spécifiques aux DU des informations dans le premier rapport d'activité PRS.

2. Procédé selon la revendication 1, comprenant en outre la réception (1250), en provenance des DU, d'accusés de réception respectifs des seconds rapports d'activité PRS.

3. Procédé selon l'une quelconque des revendications 1 et 2, comprenant en outre la réception (1260), en provenance des DU, de rapports d'action PRS respectifs indiquant des actions liées au PRS transmis par des TRP associés aux DU respectives, prises par les DU respectives en réponse aux seconds rapports d'activité respectifs.

4. Procédé pour une unité distribuée, DU, d'un noeud de réseau d'accès radio, RAN, qui est associé à un ou plusieurs points de réception-transmission, TRP, le procédé comprenant :
la réception (1320), en provenance d'une unité centralisée, CU, du noeud RAN, d'un rapport d'activité du signal de référence de positionnement, PRS, qui comporte des informations sur le PRS transmis par des TRP associés à la DU ; et
sur la base du rapport d'activité PRS, l'exécution (1330) d'une ou de plusieurs actions liées au PRS transmis par les TRP associés à la DU,
dans lequel l'exécution (1330) des une ou plusieurs actions sur la base du rapport d'activité PRS comporte l'un ou plusieurs parmi :
la désactivation ou le maintien de la désactivation (1331) d'une ou de plusieurs premières ressources PRS indiquées par le rapport d'activité PRS ; et
l'activation ou le maintien de l'activation (1332) d'une ou de plusieurs secondes ressources PRS indiquées par le rapport d'activité PRS.

5. Procédé selon la revendication 4, comprenant en outre l'envoi (1340), à la CU, d'un accusé de réception du rapport d'activité PRS.

6. Procédé selon l'une quelconque des revendications 4 et 5, comprenant en outre l'envoi (1350), à la CU, d'un rapport d'action PRS indiquant les actions liées au PRS transmis par les TRP associés à la DU, prises par la DU en réponse au rapport d'activité PRS.

7. Procédé selon la revendication 6, dans lequel le rapport d'action PRS comporte l'une ou plusieurs parmi :
une indication de ressources ou faisceaux PRS activés ou opérationnels ; et
une indication de ressources ou faisceaux PRS désactivés ou non opérationnels.

8. Procédé selon l'une quelconque des revendications 4 à 7, dans lequel le rapport d'activité PRS comporte une liste d'ensembles de ressources PRS pour les TRP associés à la DU.

9. Procédé selon la revendication 8, dans lequel le rapport d'activité PRS comporte également les informations suivantes associées à chaque ensemble particulier des ensembles de ressources PRS dans la liste :
identifiants de ressources PRS au sein de l'ensemble de ressources PRS particulier ; et
un ou plusieurs des éléments suivants associés à chaque ressource particulière des ressources PRS au sein de l'ensemble de ressources PRS particulier :
un certain nombre d'UE qui ont signalé une puissance de réception de signal de référence, RSRP, supérieure à un seuil pour la ressource PRS particulière ;
une RSRP moyenne signalée pour la ressource PRS particulière ;
une qualité reçue de signal de référence, RSRQ, moyenne signalée pour la ressource PRS particulière ; et
les relations de quasi-colocation, QCL, pour la ressource PRS particulière.

10. Procédé selon la revendication 8, dans lequel le rapport d'activité PRS comporte également les informations suivantes associées à chaque ensemble particulier des ensembles de ressources PRS dans la liste :
un certain nombre d'UE qui ont signalé une puissance de réception de signal de référence, RSRP, supérieure à un seuil pour l'ensemble de ressources PRS particulier ;
une RSRP moyenne signalée pour l'ensemble de ressources PRS particulier ;
une qualité reçue de signal de référence, RSRQ, moyenne signalée pour l'ensemble de ressources PRS particulier ; et les relations de quasi-colocation, QCL, pour l'ensemble de ressources PRS particulier.

11. Procédé selon l'une quelconque des revendications 4 à 10, dans lequel :
les une ou plusieurs premières ressources PRS sont indiquées par le rapport d'activité PRS comme n'ayant aucune mesure d'UE ou comme étant des mesures d'UE qui ne répondent pas à un ou plusieurs critères ; et
les une ou plusieurs secondes ressources PRS sont indiquées par le rapport d'activité PRS comme ayant des mesures d'UE qui répondent aux un ou plusieurs critères.

12. Procédé selon la revendication 11, dans lequel les un ou plusieurs critères comportent l'un quelconque parmi :
un seuil de puissance reçue de signal de référence, RSRP ;
un certain nombre d'UE qui ont signalé une RSRP supérieure au seuil RSRP ;
une RSRP moyenne signalée par rapport au seuil RSRP ;
un seuil de qualité reçue de signal de référence, RSRQ ;
un certain nombre d'UE qui ont signalé une RSRQ supérieure au seuil RSRQ ; et
une RSRQ moyenne signalée par rapport au seuil RSRQ.

13. Procédé selon l'une quelconque des revendications 11 et 12, dans lequel un ou plusieurs critères s'appliquent à l'un des éléments suivants : chaque ressource PRS, ou chaque ensemble de ressources PRS comprenant une pluralité de ressources PRS.

14. Unité centralisée, CU (110, 510, 810, 1500) d'un noeud de réseau d'accès radio, RAN, (100, 210, 220, 422, 500) qui est associée à un ou plusieurs points de réception-transmission, TRP (422a, 422b), 521, 531), la CU étant en outre configurée pour :
recevoir, en provenance d'un noeud de positionnement (440, 1500) associé au RAN, un premier rapport d'activité du signal de référence de positionnement, PRS, qui comporte des informations sur le PRS transmis par des TRP associés à une ou plusieurs unités distribuées, DU (120, 130, 520, 530, 820, 1500) du noeud RAN ;
l'association des informations dans le premier rapport d'activité PRS aux DU respectives du noeud RAN ; et
l'envoi, aux DU, de seconds rapports d'activité PRS respectifs qui comportent les informations associées aux DU respectives, de sorte que les seconds rapports d'activité PRS auront des sous-ensembles spécifiques aux DU des informations dans le premier rapport d'activité PRS.

15. CU selon la revendication 14, étant configurée pour exécuter des opérations correspondant à l'un quelconque des procédés selon les revendications 2 et 3.

16. Unité distribuée, DU (120, 130, 520, 530, 820, 1500) d'un noeud de réseau d'accès radio, RAN, (100, 210, 220, 422, 500) qui est associée à un ou plusieurs points de réception-transmission, TRP (422a, 422b, 521, 531), la DU étant configurée pour :
recevoir, en provenance d'une unité centralisée, CU (110, 510, 810, 1500) du noeud RAN, un rapport d'activité du signal de référence de positionnement, PRS, qui comporte des informations sur le PRS transmis par des TRP associés à la DU ; et
sur la base du rapport d'activité PRS, exécuter une ou plusieurs actions liées au PRS transmis par les TRP associés à la DU,
dans lequel l'exécution des une ou plusieurs actions sur la base du rapport d'activité PRS comporte l'un ou plusieurs parmi :
la désactivation ou le maintien de la désactivation d'une ou de plusieurs premières ressources PRS indiquées par le rapport d'activité PRS ; et
l'activation ou le maintien de l'activation d'une ou de plusieurs secondes ressources PRS indiquées par le rapport d'activité PRS.

17. DU selon la revendication 16, étant configurée pour exécuter des opérations correspondant à l'un quelconque des procédés selon les revendications 5 et 13.

18. Support non transitoire lisible par ordinateur (1520) stockant des instructions exécutables par ordinateur qui, lorsqu'elles sont exécutées par un circuit de traitement (1510) d'une unité distribuée, DU (120, 130, 520, 530, 820, 1500) d'un noeud de réseau d'accès radio, RAN, (100, 210, 220, 422, 500) qui est associé à un ou plusieurs points de réception-transmission, TRP (422a, 422b, 521, 531), configurent la DU pour exécuter des opérations correspondant à l'un quelconque des procédés selon les revendications 4 à 13.

19. Produit de programme informatique (1521) comprenant des instructions exécutables par ordinateur qui, lorsqu'elles sont exécutées par un circuit de traitement (1510) d'une unité distribuée, DU (120, 130, 520, 530, 820, 1500) d'un noeud de réseau d'accès radio, RAN, (100, 210, 220, 422, 500) qui est associé à un ou plusieurs points de réception-transmission, TRP (422a, 422b, 521, 531), configurent la DU pour exécuter des opérations correspondant à l'un quelconque des procédés selon les revendications 4 à 13.
